(19) Europäisches Patentamt / European Patent Office / Office européen des brevets

(11) **EP 4 550 076 A1**

(12) **EUROPEAN PATENT APPLICATION**
published in accordance with Art. 153(4) EPC

(43) Date of publication:
07.05.2025 Bulletin 2025/19

(21) Application number: 23831577.4

(22) Date of filing: 29.06.2023

(51) International Patent Classification (IPC):
$G05D\ 3/12^{(2006.01)}$    $G05B\ 13/02^{(2006.01)}$
$G05B\ 19/4155^{(2006.01)}$    $G07C\ 3/00^{(2006.01)}$
$H02P\ 29/00^{(2016.01)}$

(52) Cooperative Patent Classification (CPC):
G05B 13/02; G05B 19/4155; G05D 3/12;
G07C 3/00; H02P 29/00

(86) International application number:
PCT/JP2023/024163

(87) International publication number:
WO 2024/005138 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.07.2022 JP 2022107085

(71) Applicant: Panasonic Intellectual Property
Management Co., Ltd.
Kadoma-shi, Osaka 571-0057 (JP)

(72) Inventors:
• TOSHIHIRO Shunsaku
Kadoma-shi, Osaka 571-0057 (JP)
• SATO Taichi
Kadoma-shi, Osaka 571-0057 (JP)

(74) Representative: SSM Sandmair
Patentanwälte Rechtsanwalt
Partnerschaft mbB
Joseph-Wild-Straße 20
81829 München (DE)

(54) **CONTROL PARAMETER GENERATION METHOD, PROGRAM, RECORDING MEDIUM, AND CONTROL PARAMETER GENERATION DEVICE**

(57) A control parameter generation method used in a production device, the method comprising: acquiring measurement data indicating a position from a sensor that measures the position of an object to be driven; and generating, based on the measurement data, evaluation index data indicating vibration of the object to be driven after a time at which the object to be driven has arrived. **In a case where the vibration indicated by the evaluation index data is equal to or less than a predetermined threshold, based on the evaluation index data, the control parameter is updated using a machine learning model that learns the relationship between the evaluation index data and the control parameter, and in a case where the vibration indicated by the evaluation index data exceeds the predetermined threshold, the update of the control parameter is interrupted.**

FIG. 1

**Description**

TECHNICAL FIELD

The present disclosure relates to a generation method of a control parameter, and more particularly to a generation method of a control parameter used in a production device.

BACKGROUND ART

Conventionally, a generation method of a parameter for controlling a device, that is, a control parameter has been proposed (see, for example, PTL 1).

Citation List

Patent Literature

PTL 1: WO 2018/151215 A

SUMMARY OF THE INVENTION

Conventionally, generation of an appropriate control parameter has been desired.
Therefore, an object of the present disclosure is to provide a control parameter generation method and the like capable of generating an appropriate control parameter.
A control parameter generation method according to one aspect of the present disclosure generates a control parameter generated by a control parameter generation device and used by a production device while a sensor confirms a state of the production device. The production device includes a servomotor, a control circuit that controls the servomotor, a memory that stores the control parameter used when the control circuit controls the servomotor, and an object to be driven driven by the servomotor. The sensor measures a position of the object to be driven after a time at which the object to be driven has reached an allowable position, where the object to be driven is evaluated to have reached a predetermined target position, based on a command for setting the position of the object to be driven to the predetermined target position, and outputs measurement data indicating the position. The control parameter generation method includes the following method. Acquire measurement data indicating the position output from the sensor. Generate, based on the measurement data, evaluation index data indicating vibration of the object to be driven after a time at which the object to be driven has reached the allowable position. When the vibration indicated by the evaluation index data is equal to or less than a predetermined threshold based on the evaluation index data, update the control parameter using a machine learning model that learns a relationship between the evaluation index data and the control parameter. Output the updated control parameter to the production device to be stored in the memory, and interrupt the update of the control parameter when the vibration indicated by the evaluation index data exceeds the predetermined threshold.
A program according to another aspect of the present disclosure is a program for causing a computer of an information processing device connected to the production device to execute the control parameter generation method described above.
A recording medium according to another aspect of the present disclosure is a recording medium recording a program for causing a computer of an information processing device connected to the production device to execute the control parameter generation method.
A control parameter generation device according to another aspect of the present disclosure is a control parameter generation device that generates a control parameter used by a production device while a sensor confirms a state of the production device. The production device includes a servomotor, a first control circuit that controls the servomotor, a memory that stores a control parameter used when the first control circuit controls the servomotor, and an object to be driven driven by the servomotor. The sensor measures a position of the object to be driven after a time at which the object to be driven has reached an allowable position, where the object to be driven is evaluated to have reached a predetermined target position, based on a command for setting the position of the object to be driven to the predetermined target position, and outputs measurement data indicating the position. The control parameter generation device includes an input part, a second control circuit, and an output part. The input part acquires measurement data indicating the position from the sensor. The second control circuit generates, based on the measurement data, evaluation index data indicating vibration of the object to be driven after a time at which the object to be driven has reached the allowable position, and updates the control parameter using a machine learning model that learns a relationship between the evaluation index data and the control parameter when the vibration indicated by the evaluation index data is equal to or less than a predetermined threshold on the basis of the evaluation index data. The output part outputs the updated control parameter to the production device in order to store the updated control parameter in the memory. The second control circuit further interrupts the update of the control parameter when the vibration indicated by the evaluation index data exceeds the predetermined threshold.

A control parameter generation method according to one aspect of the present disclosure generates a control parameter generated by a control parameter generation device and used by a production device while a sensor with a processing device confirms a state of the production device. The production device includes a servomotor, a control circuit that controls the servomotor, a memory that stores a control parameter used when the control circuit controls the servomotor, and an object to be driven driven by the servomotor. The sensor with a processing device measures a position of the object to be driven after a time at which the object to be driven has reached an allowable position, where the object to be driven is evaluated to have reached a predetermined target position, based on a command for setting the position of the object to be driven to the predetermined target position, and outputs evaluation index data indicating vibration of the object to be driven after the time at which the object to be driven has reached the allowable position. The control parameter generation method includes the following method. Acquire evaluation index data, which is output from the sensor with a processing device, indicating vibration of the object to be driven after a time at which the object to be driven has reached the allowable position. When the vibration indicated by the evaluation index data is equal to or less than a predetermined threshold based on the evaluation index data, update the control parameter using a machine learning model that learns a relationship between the evaluation index data and the control parameter. Output the updated control parameter to the production device to be stored in the memory. Interrupt the update of the control parameter when the vibration indicated by the evaluation index data exceeds the predetermined threshold.

A program according to another aspect of the present disclosure is a program for causing a computer of an information processing device connected to the production device to execute the control parameter generation method described above.

A recording medium according to another aspect of the present disclosure is a recording medium recording a program for causing a computer of an information processing device connected to the production device to execute the control parameter generation method.

A control parameter generation device according to another aspect of the present disclosure is a control parameter generation device in which a sensor with a processing device generates a control parameter to be used by a production device while confirming a state of the production device. The production device includes a servomotor, a first control circuit that controls the servomotor, a memory that stores a control parameter used when the first control circuit controls the servomotor, and an object to be driven driven by the servomotor. The sensor with a processing device measures a position of the object to be driven after a time at which the object to be driven has reached an allowable position, where the object to be driven is evaluated to have reached a predetermined target position, based on a command for setting the position of the object to be driven to the predetermined target position, and outputs evaluation index data indicating vibration of the object to be driven after the time at which the object to be driven has reached the allowable position. The control parameter generation device includes an input part, a second control circuit, and an output part. The input part acquires evaluation index data, which is output from the sensor with a processing device, indicating vibration of the object to be driven after the time at which the object to be driven has reached the allowable position. The second control circuit updates, based on the evaluation index data, the control parameter using a machine learning model that learns a relationship between the evaluation index data and the control parameter when vibration indicated by the evaluation index data is equal to or less than a predetermined threshold. The output part outputs the updated control parameter to the production device in order to store the updated control parameter in the memory. The second control circuit further interrupts the update of the control parameter when the vibration indicated by the evaluation index data exceeds the predetermined threshold.

According to the control parameter generation method, the program, the recording medium, and the control parameter generation device according to the aspect of the present disclosure, an appropriate control parameter can be generated.

BRIEF DESCRIPTION OF THE DRAWINGS

Fig. 1 is a schematic diagram illustrating an outline of a control parameter generation system according to a first exemplary embodiment.
Fig. 2 is a block diagram illustrating a configuration of the control parameter generation system according to the first exemplary embodiment.
Fig. 3 is a schematic diagram illustrating an example of control parameters according to the first exemplary embodiment.
Fig. 4 is a schematic diagram illustrating an example of transition of a position deviation of an object to be driven with respect to a target position.

Fig. 5 is a schematic diagram illustrating an example of measurement data according to the first exemplary embodiment.

Fig. 6 is a schematic diagram illustrating a state in which a machine learning model according to the first exemplary embodiment outputs a control parameter on the basis of a result of learning a relationship between evaluation index data and a control parameter.

Fig. 7 is a diagram illustrating an example of an image generated by an image generation part according to the first exemplary embodiment.

Fig. 8 is a diagram illustrating an example of an image generated by the image generation part according to the first exemplary embodiment.

Fig. 9 is a sequence diagram of first control parameter adjustment processing according to the first exemplary embodiment.

Fig. 10 is a flowchart of the first control parameter adjustment processing according to the first exemplary embodiment.

Fig. 11 is a schematic diagram illustrating an outline of a control parameter generation system according to a second exemplary embodiment.

Fig. 12 is a block diagram illustrating a configuration of the control parameter generation system according to the second exemplary embodiment.

Fig. 13 is a sequence diagram of second control parameter adjustment processing according to the second exemplary embodiment.

Fig. 14 is a flowchart of the second control parameter adjustment processing according to the second exemplary embodiment.

Fig. 15 is a schematic diagram illustrating an outline of a control parameter generation system according to a third exemplary embodiment.

Fig. 16 is a block diagram illustrating a configuration of the control parameter generation system according to the third exemplary embodiment.

Fig. 17 is a data configuration diagram illustrating an example of a data configuration of an adjustment history according to the third exemplary embodiment.

Fig. 18 is a diagram illustrating an example of an image displayed by a display device according to the third exemplary embodiment.

Fig. 19 is a diagram illustrating an example of an adjustment restart time point specifying image displayed by the display device according to the third exemplary embodiment.

Fig. 20 is a flowchart of third control parameter adjustment processing according to the third exemplary embodiment.

Fig. 21 is a schematic diagram illustrating an outline of a control parameter generation system according to a fourth exemplary embodiment.

Fig. 22 is a block diagram illustrating a configuration of the control parameter generation system according to the fourth exemplary embodiment.

Fig. 23 is a flowchart of fourth control parameter adjustment processing according to the fourth exemplary embodiment.

Fig. 24 is a block diagram illustrating a configuration of a generation device according to a modification.

Fig. 25 is a block diagram illustrating a configuration of a control parameter generation system according to a modification.

Fig. 26 is a diagram illustrating a vibration waveform of a production device.

## DESCRIPTION OF EMBODIMENT

(Background to obtain one aspect of the present disclosure)

Conventionally, adjustment of a control parameter used in a production device including a servomotor that drives an object to be driven is performed manually. However, the number of control parameters used in such a production device may be 80, and the number of parameters that need to be actually adjusted may be 30 to 60. In addition, parameters to be adjusted are different depending on an object to be driven, an application, and the like mounted on a target production device.

Under such circumstances, conventionally, adjustment of control parameters has been individually performed by a skilled technician. Nevertheless, adjustment of the control parameter may require a period of several days order.

Such adjustment of the control parameter is necessary for suppressing generation of abnormal noise due to vibration, suppressing an adverse effect on a next operation caused by vibration of a previous operation when the operation is once stopped and the next operation is started, and the like.

For example, PTL 1 proposes adjusting such control parameters using a machine learning model. However, a skilled technician adjusts control parameters including human five senses such as confirming abnormal sound by hearing and confirming vibration by visual sense or tactile sense. Therefore, it is necessary to separately examine what kind of data is input to the machine learning model to effectively adjust the control parameter.

Under such a background, the inventors have conducted intensive studies and experiments on what kind of data is input to the machine learning model to effectively adjust the control parameter. As a result, the inventors have found that there is a correlation between the evaluation index data indicating the vibration of the object to be driven after the time at which the object to be driven has reached the allowable position, where it can be evaluated that the object to be driven has reached the predetermined target position, and the control parameter. The inventors have found that the control parameter can be effectively adjusted by inputting the evaluation index data to the machine learning model.

Based on this finding, the inventors have further conducted studies and experiments, and conceived a control parameter generation method capable of generating an appropriate control parameter in a relatively short time without using a skilled technician.

However, the inventors have noticed that there is a case where it is desired to redo the adjustment of the control parameter again even after the control parameter is adjusted using the control parameter generation method. That is, the inventors have noticed that, even after the control parameter is adjusted using the control parameter generation method, abnormal noise or the like due to vibration may still occur. In such a case, it is necessary to redo the adjustment of the control parameter again from the beginning by using this control parameter generation method. Then, it was confirmed that the generation of abnormal noise and the like due to vibration was suppressed by redoing the adjustment again.

The inventors investigated the cause of occurrence of such a phenomenon, and obtained the following findings.

That is, in a case where the control parameter is adjusted using the machine learning model, the production device or the like to be adjusted may not be monitored by a person in ordinary times. Therefore, it has been found that vibration of the production device or the like to be adjusted may adversely affect adjustment of the control parameter due to that, during a period in which the control parameter is adjusted, a person walks around the production device or the like to be adjusted, a large truck or the like travels on a road around a factory or the like in which the production device or the like to be adjusted is installed, or a door of an entrance or an exit of a room or the like in which the production device or the like to be adjusted is installed is opened or closed.

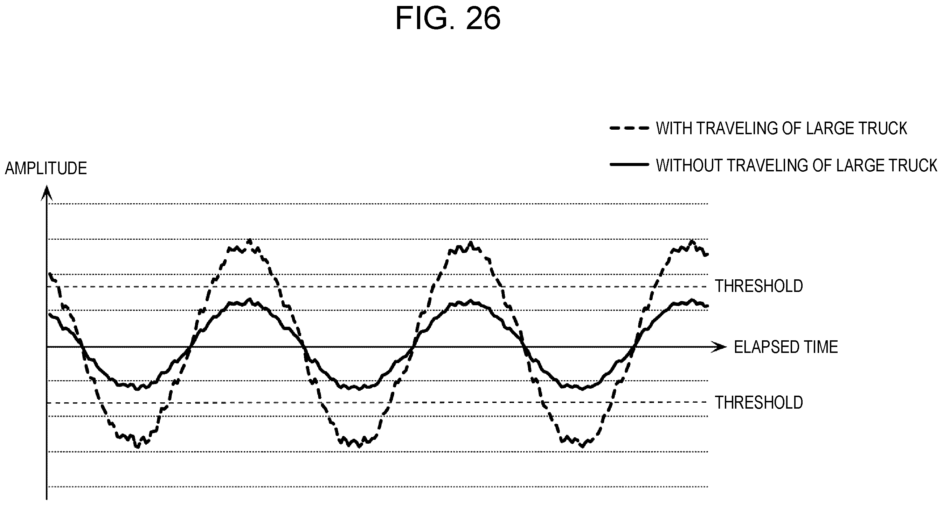

Fig. 26 is an example of actual measurement data based on which the inventors have obtained the above knowledge, and is a vibration waveform of the production device showing actual measurement data of displacement of the production device measured by a laser displacement meter in a case where a large truck travels on a road around a factory where the production device is installed in a period in which a control parameter is adjusted, and actual measurement data of displacement of the production device measured by the laser displacement meter in a case where the large truck does not travel.

In Fig. 26, the horizontal axis represents elapsed time, and the vertical axis represents amplitude of displacement of the production device.

As illustrated in Fig. 26, the inventors have found the fact that even in a period in which the amplitude of the production device sufficiently falls within the range of the threshold when the large truck does not travel on the surrounding road, the vibration of the production device does not fall within the range of the threshold when the large truck travels on the surrounding road. Then, the inventors have found the fact that in a case where the above-described phenomenon that the vibration of the production device does not fall within the range of the threshold due to the large truck traveling on the surrounding road occurs during the period in which the control parameter is adjusted, the generation of the abnormal noise and the like due to the vibration may still occur even after the control parameter is adjusted.

The inventors further acquired and analyzed actual measurement data, and confirmed that a phenomenon in which the vibration of the production device does not fall within the range of the threshold due to walking of a person around the production device, and a phenomenon in which the vibration of the production device does not fall within the range of the threshold due to opening and closing of the door of the entrance of the room in which the production device is installed occur. Then, the inventors have ascertained the fact that even when such a phenomenon occurs during the period in which the control parameter is adjusted, even after the control parameter is adjusted, the generation of abnormal noise and the like due to vibration may still occur.

Therefore, the inventors have further conducted studies and experiments based on the newly obtained knowledge, and conceived a control parameter generation method, a program, a recording medium, and a control parameter generation device according to the present disclosure described below.

A control parameter generation method according to one aspect of the present disclosure generates a control parameter generated by a control parameter generation device and used by a production device while a sensor confirms a state of the production device. The production device includes a servomotor, a control circuit that controls the servomotor, a memory that stores the control parameter used when the control circuit controls the servomotor, and an object to be driven driven by the servomotor. The sensor measures a position of the object to be driven after a time at which the object to be driven has reached an allowable position, where the object to be driven is evaluated to have reached a predetermined target position, based on a command for setting the position of the object to be driven to the predetermined target position, and outputs measurement data indicating the position. The control parameter generation method includes the following method. Acquire measurement data indicating the position output from the sensor. Generate, based on the measurement data, evaluation index data indicating vibration of the object to be driven after a time at which the object to be driven has reached the allowable position. When the vibration indicated by the evaluation index data is equal to or less than a predetermined threshold based on the evaluation index data, update the control parameter using a machine learning model that learns a relationship between the evaluation index data and the control parameter. Output the updated control parameter to the production device to be stored in the memory. Interrupt the update of the control parameter when the vibration indicated by the evaluation index data exceeds the predetermined threshold.

According to the control parameter generation method, by updating the control parameter based on the evaluation index data indicating the vibration after the time at which the allowable position has been reached, an appropriate control parameter can be generated in a relatively short time without being performed by a skilled technician.

Furthermore, according to the control parameter generation method, when the vibration indicated by the evaluation index data exceeds the predetermined threshold, the update of the control parameter is interrupted, and thus, it is possible to suppress the vibration of the production device or the like to be adjusted during the period in which the control parameter is adjusted from adversely affecting the adjustment of the control parameter.

Therefore, according to the control parameter generation method, it is possible to suppress the frequency at which the control parameter needs to be adjusted again.

Further, when the vibration indicated by the evaluation index data exceeds the predetermined threshold, a message indicating that the update of the control parameter is interrupted may be further output to the display device.

As a result, when the vibration indicated by the evaluation index data exceeds the predetermined threshold, it is possible to cause the display device to display a message indicating that the update of the parameter is interrupted.

When the vibration indicated by the evaluation index data becomes equal to or less than the predetermined threshold after the update of the control parameter is interrupted, the interrupted update of the control parameter may be resumed based on the evaluation index data generated based on the measurement data acquired after the time when the vibration indicated by the evaluation index data becomes equal to or less than the predetermined threshold.

As a result, when the vibration indicated by the evaluation index data becomes equal to or less than the predetermined threshold again, the interrupted update of the control parameter can be resumed.

Further, the production device may include any one of a mounting device, a processing device, and a machining device.

As a result, it is possible to generate an appropriate control parameter for the production device that is any one of the mounting device, the processing device, and the machining device.

A program according to another aspect of the present disclosure is a program for causing a computer of an information processing device connected to the production device to execute the control parameter generation method described above.

According to the program described above, by updating the control parameter based on the evaluation index data indicating the vibration after the time at which the allowable position has been reached, it is possible to generate an appropriate control parameter in a relatively short time without being performed by a skilled technician.

Furthermore, according to the above program, when the vibration indicated by the evaluation index data exceeds the predetermined threshold, the update of the control parameter is interrupted, and thus, it is possible to suppress the vibration of the production device or the like to be adjusted in the period in which the control parameter is adjusted from adversely affecting the adjustment of the control parameter.

Therefore, according to the program, it is possible to suppress the frequency at which the control parameter needs to be adjusted again.

A recording medium according to another aspect of the present disclosure is a recording medium recording a program for causing a computer of an information processing device connected to the production device to execute the control parameter generation method.

According to the recording medium, by updating the control parameter based on the evaluation index data indicating the vibration after the time at which the allowable position has been reached, it is possible to generate an appropriate control parameter in a relatively short time without being performed by a skilled technician.

Furthermore, according to the recording medium, when the vibration indicated by the evaluation index data exceeds the predetermined threshold, the update of the control parameter is interrupted, and thus, it is possible to suppress the vibration of the production device or the like to be adjusted in the period in which the control parameter is adjusted from adversely affecting the adjustment of the control parameter.

Therefore, according to the recording medium, it is possible to suppress the frequency at which the control parameter needs to be adjusted again.

A control parameter generation device according to another aspect of the present disclosure is a control parameter generation device that generates a control parameter used by a production device while a sensor confirms a state of the production device. The production device includes a servomotor, a first control circuit that controls the servomotor, a memory that stores a control parameter used when the first control circuit controls the servomotor, and an object to be driven driven by the servomotor. The sensor measures a position of the object to be driven after a time at which the object to be driven has reached an allowable position, where the object to be driven is evaluated to have reached a predetermined target position, based on a command for setting the position of the object to be driven to the predetermined target position, and outputs measurement data indicating the position. The control parameter generation device includes an input part, a second control circuit, and an output part. The input part acquires measurement data indicating the position output from the sensor. The second control circuit generates, based on the measurement data, evaluation index data indicating vibration of the object to be driven after a time at which the object to be driven has reached the allowable position, and updates the control parameter using a machine learning model that learns a relationship between the evaluation index data and the control parameter when the vibration indicated by the evaluation index data is equal to or less than a predetermined threshold on the basis of the evaluation index data. The output part outputs the updated control parameter to the production device in order to store the updated control parameter in the memory. The second control circuit further interrupts the update of the control parameter when the vibration indicated by the evaluation index data exceeds the predetermined threshold.

According to the control parameter generation device, by updating the control parameter on the basis of the evaluation index data indicating the vibration after the time at which the object to be driven has reached the allowable position, it is possible to generate an appropriate control parameter in a relatively short time without being performed by a skilled technician.

Furthermore, according to the control parameter generation device, when the vibration indicated by the evaluation index data exceeds the predetermined threshold, the update of the control parameter is interrupted, and thus, it is possible to suppress the vibration of the production device or the like to be adjusted during the period in which the control parameter is adjusted from adversely affecting the adjustment of the control parameter.

Therefore, according to the control parameter generation device, it is possible to suppress the frequency at which the control parameter needs to be adjusted again.

A control parameter generation method according to another aspect of the present disclosure generates a control parameter used by a production device while a sensor with a processing device confirms a state of the production device. The production device includes a servomotor, a control circuit that controls the servomotor, a memory that stores a control parameter used when the control circuit controls the servomotor, and an object to be driven driven by the servomotor. The sensor with a processing device measures a position of the object to be driven after a time at which the object to be driven has reached an allowable position, where the object to be driven is evaluated to have reached a predetermined target position, based on a command for setting the position of the object to be driven to the predetermined target position, and outputs evaluation index data indicating vibration of the object to be driven after the time at which the object to be driven has reached the allowable position. The control parameter generation method includes the following method. Acquire evaluation index data, which is output from the sensor with a processing device, indicating vibration of the object to be driven after a time at which the object to be driven has reached the allowable position. When the vibration indicated by the evaluation index data is equal to or less than a predetermined threshold based on the evaluation index data, update the control parameter using a machine learning model that learns a relationship between the evaluation index data and the control parameter. Output the updated control parameter to the production device to be stored in the memory. Interrupt the update of the control parameter when the vibration indicated by the evaluation index data exceeds the predetermined threshold.

According to the control parameter generation method described above, by updating the control parameter based on the evaluation index data indicating the vibration after the time at which the object to be driven has reached the allowable position, it is possible to generate an appropriate control parameter in a relatively short time without being performed by a skilled technician.

Furthermore, according to the control parameter generation method, when the vibration indicated by the evaluation index data exceeds the predetermined threshold, the update of the control parameter is interrupted, and thus, it is possible to suppress the vibration of the production device or the like to be adjusted during the period in which the control parameter is adjusted from adversely affecting the adjustment of the control parameter.

Therefore, according to the control parameter generation method, it is possible to suppress the frequency at which the control parameter needs to be adjusted again.

Further, when the vibration indicated by the evaluation index data exceeds the predetermined threshold, a message indicating that the update of the control parameter is interrupted may be further output to the display device.

As a result, when the vibration indicated by the evaluation index data exceeds the predetermined threshold, it is possible to cause the display device to display a message indicating that the update of the parameter is interrupted.

When the vibration indicated by the evaluation index data becomes equal to or less than the predetermined threshold after the update of the control parameter is interrupted, the interrupted update of the control parameter may be resumed based on the evaluation index data acquired after the time at which the vibration indicated by the evaluation index data becomes equal to or less than the predetermined threshold.

As a result, when the vibration indicated by the evaluation index data becomes equal to or less than the predetermined threshold again, the interrupted update of the control parameter can be resumed.

Further, the evaluation index data may be generated in the sensor with a processing device on the basis of the position of the object to be driven measured by the sensor with a processing device.

As a result, the evaluation index data can be generated based on the position of the object to be driven measured by the sensor with a processing device.

Further, the sensor with a processing device may include an image processing device.

As a result, the evaluation index data can be generated based on image processing.

Further, the production device may include any one of a mounting device, a processing device, and a machining device.

As a result, it is possible to generate an appropriate control parameter for the production device that is any one of the mounting device, the processing device, and the machining device.

A program according to another aspect of the present disclosure is a program for causing a computer of an information processing device connected to the production device to execute the control parameter generation method described above.

According to the program described above, by updating the control parameter based on the evaluation index data indicating the vibration after the time at which the allowable position has been reached, it is possible to generate an appropriate control parameter in a relatively short time without being performed by a skilled technician.

Furthermore, according to the above program, when the vibration indicated by the evaluation index data exceeds the predetermined threshold, the update of the control parameter is interrupted, and thus, it is possible to suppress the vibration of the production device or the like to be adjusted in the period in which the control parameter is adjusted from adversely affecting the adjustment of the control parameter.

Therefore, according to the program, it is possible to suppress the frequency at which the control parameter needs to be adjusted again.

A recording medium according to another aspect of the present disclosure is a recording medium recording a program for causing a computer of an information processing device connected to the production device to execute the control parameter generation method.

According to the recording medium, by updating the control parameter based on the evaluation index data indicating the vibration after the time at which the allowable position has been reached, it is possible to generate an appropriate control parameter in a relatively short time without being performed by a skilled technician.

Furthermore, according to the recording medium, when the vibration indicated by the evaluation index data exceeds the predetermined threshold, the update of the control parameter is interrupted, and thus, it is possible to suppress the vibration of the production device or the like to be adjusted in the period in which the control parameter is adjusted from adversely affecting the adjustment of the control parameter.

Therefore, according to the recording medium, it is possible to suppress the frequency at which the control parameter needs to be adjusted again.

A control parameter generation device according to another aspect of the present disclosure is a control parameter generation device that generates a control parameter to be used by a production device while a sensor with a processing device confirms a state of the production device. The production device includes a servomotor, a first control circuit that controls the servomotor, a memory that stores a control parameter used when the first control circuit controls the servomotor, and an object to be driven driven by the servomotor. The sensor with a processing device measures a position of the object to be driven after a time at which the object to be driven has reached an allowable position, where the object to be driven is evaluated to have reached a predetermined target position, based on a command for setting the position of the object to be driven to the predetermined target position, and outputs evaluation index data indicating vibration of the object to be driven after the time at which the object to be driven has reached the allowable position. The control parameter generation device includes an input part, a second control circuit, and an output part. The input part acquires evaluation index data, which is output from the sensor with a processing device, indicating vibration of the object to be driven after the time at which the object to be driven has reached the allowable position. The second control circuit updates, based on the evaluation index data, the control parameter using a machine learning model that learns a relationship between the evaluation index data and the control parameter when vibration indicated by the evaluation index data is equal to or less than a predetermined threshold. The output part outputs the updated control parameter to the production device in order to store the updated control parameter in the memory. The second control circuit further interrupts the update of the control parameter when the vibration indicated by the evaluation index data exceeds the predetermined threshold.

According to the control parameter generation device, by updating the control parameter based on the evaluation index data indicating the vibration after the time at which the allowable position has been reached, it is possible to generate an appropriate control parameter in a relatively short time without being performed by a skilled technician.

Furthermore, according to the control parameter generation device, when the vibration indicated by the evaluation index data exceeds the predetermined threshold, the update of the control parameter is interrupted, and thus, it is possible to suppress the vibration of the production device or the like to be adjusted during the period in which the control parameter is adjusted from adversely affecting the adjustment of the control parameter.

Therefore, according to the control parameter generation device, it is possible to suppress the frequency at which the control parameter needs to be adjusted again.

Hereinafter, a specific example of a control parameter generation system according to an aspect of the present disclosure will be described with reference to the drawings. The exemplary embodiment described herein is a specific example of the present disclosure. Therefore, numerical values, shapes, constituent elements, arrangement and connection modes of the constituent elements, steps (steps) and the order of the steps, and the like shown in the following exemplary embodiments are merely examples, and are not intended to limit the present disclosure. Each of the drawings is a schematic diagram, and is not necessarily strictly illustrated. In the drawings, substantially the same components are denoted by the same reference numerals, and redundant description will be omitted or simplified.

(First exemplary embodiment)

Hereinafter, control parameter generation system according to a first exemplary embodiment will be described. This control parameter generation system is a system that generates a control parameter used for a production device including a servomotor that drives an object to be driven.

<Configuration>

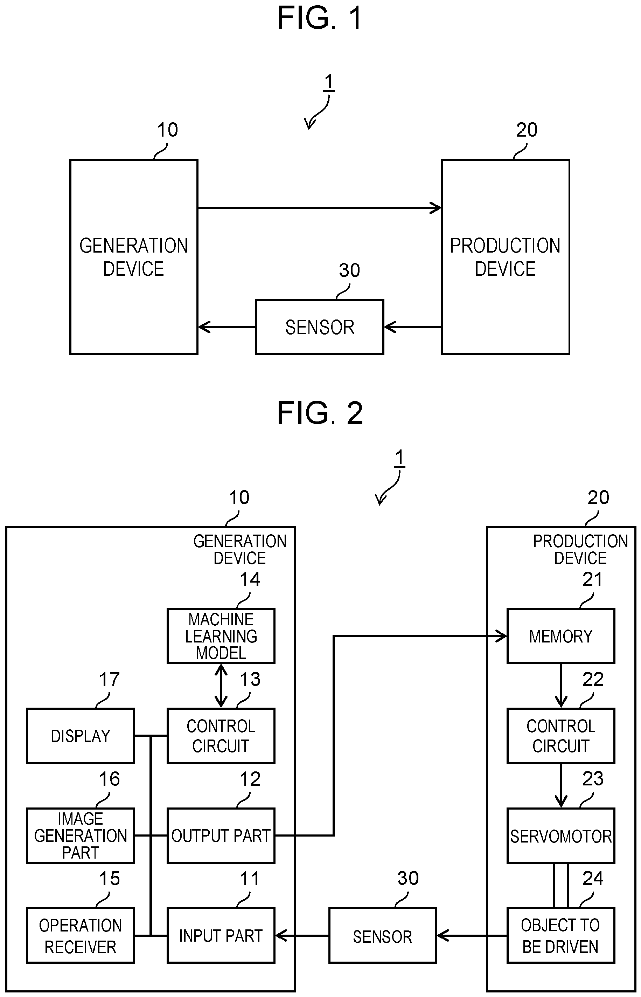

Fig. 1 is a schematic diagram illustrating an outline of control parameter generation system 1 according to the first exemplary embodiment.

Fig. 2 is a block diagram illustrating a configuration of control parameter generation system 1.

As illustrated in Fig. 1, control parameter generation system 1 includes generation device 10, production device 20, and sensor 30. Sensor 30 may be provided separately from production device 20, but may be a component included in production device 20. Furthermore, sensor 30 may be an inspection device independent of production device 20 or a part thereof.

Production device 20 is a device used to produce equipment, and performs processing, mounting, conveyance, and the like of the equipment. Production device 20 is installed, for example, in a production line of a factory. Specifically, production device 20 is, for example, a light emitting diode (LED) bonder, a mounting machine, a processing machine, a take-out robot, or the like.

As illustrated in Fig. 2, production device 20 includes memory 21, control circuit 22, servomotor 23, and object to be driven 24.

The operation of servomotor 23 is controlled by control circuit 22 to drive object to be driven 24. Servomotor 23 may be, for example, a rotary motor or a linear motor.

Object to be driven 24 is an object to be driven by servomotor 23. Object to be driven 24 is, for example, an object to be processed to be processed in production device 20, an object to be mounted to be mounted, an object to be conveyed to be conveyed, or the like. Furthermore, object to be driven 24 may be, for example, an arm that holds an object or the like handled in production device 20, or may be a tray that conveys the objects or the like.

Control circuit 22 controls servomotor 23 by outputting a command for setting the position of object to be driven 24 to a predetermined target position to servomotor 23. The command output from control circuit 22 to servomotor 23 may be, for example, a position command that commands the position of servomotor 23 or object to be driven 24, or may be, for example, a torque command that commands the torque of servomotor 23.

Control circuit 22 controls servomotor 23 based on control parameters stored in memory 21. In other words, control circuit 22 uses the control parameters stored in memory 21 when controlling servomotor 23.

Memory 21 stores the control parameters used when control circuit 22 controls servomotor 23. The control parameters stored in memory 21 are control parameters output from generation device 10.

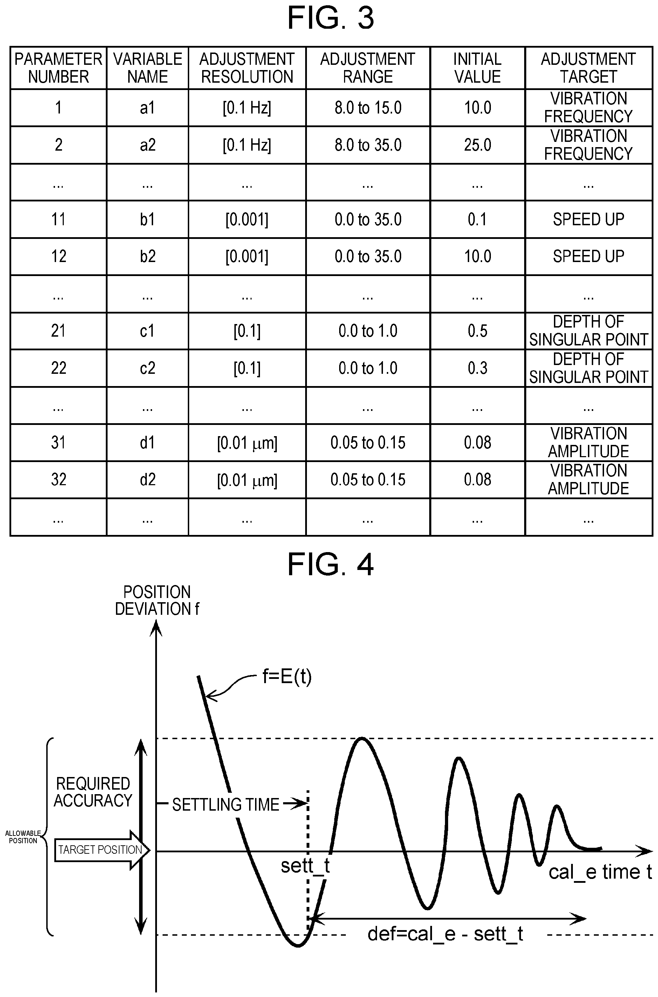

Fig. 3 is a schematic diagram illustrating an example of control parameters stored in memory 21.

As illustrated in Fig. 3, the control parameters stored in memory 21 include, for example, parameters a1 and a2 for adjusting the vibration frequency of object to be driven 24, parameters b1 and b2 for adjusting speed up of object to be driven 24, parameters c1 and c2 for adjusting the depth of the singular point in the vibration characteristic of object to be driven 24, parameters d1 and d2 for adjusting the vibration amplitude of object to be driven 24, and the like.

In general, the control parameters include parameters having a trade-off relationship with each other, for example, parameters b1 and b2 for adjusting speeding up, parameters c1 and c2 for adjusting the depth of the singular point in the vibration characteristic, and parameters d1 and d2 for adjusting the vibration amplitude.

Returning again to Figs. 1 and 2, the description of control parameter generation system 1 will be continued.

Sensor 30 measures the position of object to be driven 24. Then, sensor 30 outputs, to generation device 10, measurement data indicating the position of object to be driven 24 after the arrival time at which object to be driven 24 has reached the allowable position, where it can be evaluated that object to be driven 24 has reached the predetermined target position.

Fig. 4 is a schematic diagram illustrating an example of transition of a position deviation of object to be driven 24 with respect to a target position when production device 20 drives object to be driven 24 to the target position.

In Fig. 4, the horizontal axis represents time, and the vertical axis represents the position deviation of object to be driven 24 with respect to the target position.

As illustrated in Fig. 4, in the present specification, the allowable position refers to a position where a position deviation from a target position is within required accuracy. Furthermore, as illustrated in Fig. 4, in the present specification, the time (hereinafter, also referred to as "settling time") at which object to be driven 24 has reached the allowable position, where it can be evaluated that the target position has been reached, refers to the time (time sett_t in Fig. 4) at which object to be driven 24 has finally reached the allowable position in a case where object to be driven 24 has not deviated from the allowable position again after reaching the allowable position.

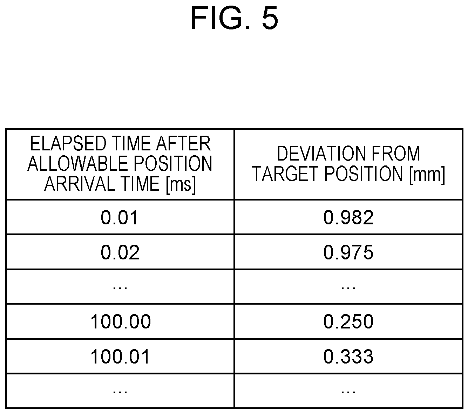

Fig. 5 is a data configuration diagram illustrating an example of measurement data output from sensor 30.

As illustrated in Fig. 5, the measurement data is, for example, data in which an elapsed time [ms] after the time at which the allowable position has been reached and a deviation amount [mm] from the target position are associated on a one-to-one basis.

Returning again to Figs. 1 and 2, the description of control parameter generation system 1 will be continued.

Generation device 10 generates a control parameter (hereinafter, also referred to as "update control parameter") for updating the control parameter (hereinafter, also referred to as a "control parameter during storage") stored in memory 21. More specifically, generation device 10 sequentially acquires the measurement data output from sensor 30 as a result of production device 20 driving object to be driven 24 to the target position using the control parameter during storage, sequentially generates the update control parameter based on the acquired measurement data, and sequentially outputs the generated update control parameter to production device 20.

As illustrated in Fig. 2, generation device 10 includes input part 11, output part 12, control circuit 13, machine learning model 14, operation receiver 15, image generation part 16, and display 17.

Generation device 10 is implemented, for example, in a computer device including a processor, a memory, and an input/output interface, by the processor executing a program stored in the memory. Such a computer device is, for example, a personal computer (personal computer).

Input part 11 acquires the measurement data output from sensor 30. Input part 11 may be, for example, an electronic component or an electronic circuit that inputs a signal.

Control circuit 13 generates evaluation index data indicating the vibration of object to be driven 24 after the settling time based on the measurement data acquired by input part 11, and updates the control parameter using machine learning model 14 that learns the relationship between the evaluation index data and the control parameter based on the generated evaluation index data.

The evaluation index data generated by control circuit 13 is any one of the following (1) to (3) or (4). That is,

(1) The sum of areas surrounded by the deviation waveform indicating the vibration of object to be driven 24 after the settling time and the reference axis (hereinafter, also referred to as "summed area evaluation index data").
(2) The variation degree of the deviation waveform indicating the vibration of object to be driven 24 after the settling time (hereinafter, also referred to as "variation degree evaluation index data").
(3) The effective value (hereinafter, also referred to as "effective value evaluation index data") of the deviation waveform indicating the vibration of object to be driven 24 after the settling time.
or
(4) Time (hereinafter, also referred to as "setting time evaluation index data") from the time when object to be driven 24 starts to be driven to the settling time.

The evaluation index data generated by control circuit 13 is designated by a user who uses control parameter generation system 1.

Hereinafter, the summed area evaluation index data, the variation degree evaluation index data, and the effective value evaluation index data generated by control circuit 13 will be described in more detail with reference to Fig. 4.

As illustrated in Fig. 4, more specifically, the summed area data generated by control circuit 13 is calculated by a mathematical formula expressed by (Formula 1), (Formula 2), or (Formula 3) in a case where position deviation f of the object to be driven with respect to the target position is represented by $f = E(t)$ as a variable at the time t.

[Math. 1]

$$\int_{\text{sett\_t}}^{\text{cal\_e}} |E(t)| \, dt \qquad \text{(Formula 1)}$$

[Math. 2]

$$\int_{\text{sett\_t}}^{\text{cal\_e}} \sqrt{E(t) \cdot E(t)} \, dt \qquad \text{(Formula 2)}$$

[Math. 3]

$$\int_{\text{sett\_t}}^{\text{cal\_e}} E(t)^2 dt \qquad \text{(Formula 3)}$$

Here, the start point sett_t of the integration interval is the settling time, and the end point cal_e of the integration interval is the time set by the user. Here, the description will be given assuming that the start point sett_t of the integration interval is the settling time, but the start point sett_t of the integration interval may be the settling time or any time after the settling time.

For example, when the position deviation of object to be driven 24 with respect to the target position reaches within 1/10 of the required accuracy and then the position deviation does not deviate from within 1/10 of the required accuracy again, cal_e may be set to a time when the position deviation finally reaches within 1/10 of the required accuracy. Furthermore, for example, cal_e may be set to a time at which the number of data included in the measurement data acquired by input part 11 reaches a predetermined number, or may be set to a time at which a specified time has elapsed from the settling time.

More specifically, when def = cal_e - sett_t, the variation degree evaluation index data generated by control circuit 13 is calculated by the formula shown in (Formula 4).

[Math. 4]

$$\frac{\int_{\text{sett\_t}}^{\text{cal\_e}} E(t)^2 dt}{\text{def}} - \left( \frac{\int_{\text{sett\_t}}^{\text{cal\_e}} |E(t)| dt}{\text{def}} \right)^2 \qquad \text{(Formula 4)}$$

More specifically, the effective value evaluation index data generated by control circuit 13 is calculated by the formula shown in (Formula 5).

[Math. 5]

$$\sqrt{\frac{1}{\text{def}} \int_{\text{sett\_t}}^{\text{cal\_e}} E(t)^2 dt} \qquad \text{(Formula 5)}$$

Returning again to Figs. 1 and 2, the description of control parameter generation system 1 will be continued.

Machine learning model 14 is a machine learning model that learns the relationship between the evaluation index data and the control parameter, learns the relationship between the evaluation index data and the control parameter each time the evaluation index data is sequentially input from control circuit 13, and sequentially outputs the control parameter to control circuit 13 based on the learning result.

More specifically, machine learning model 14 learns the relationship between the evaluation index data and the control parameter (hereinafter, also referred to as a "corresponding control parameter") corresponding to the evaluation index data each time the evaluation index data is sequentially input from control circuit 13 using the Bayesian optimization algorithm, and outputs the control parameter in which the evaluation index data is predicted to be the smallest to control circuit 13 based on the learning result.

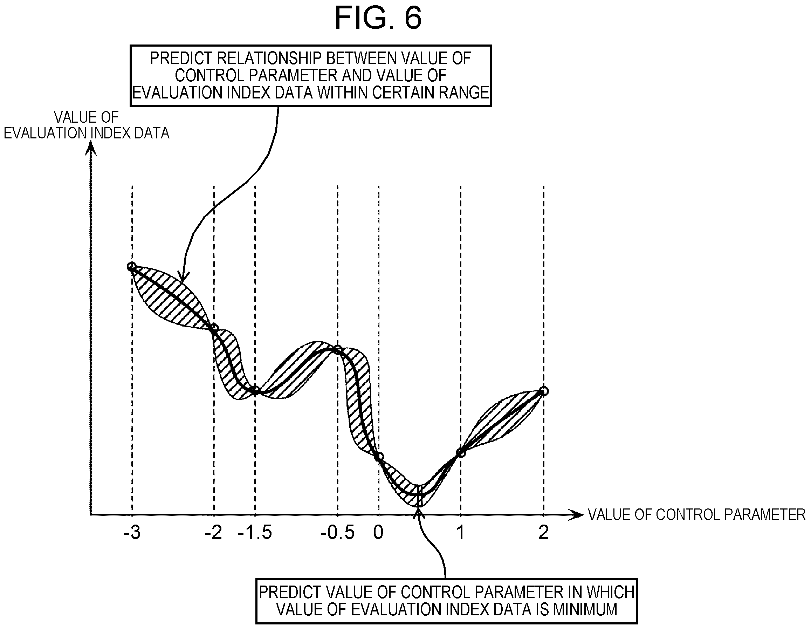

Fig. 6 is a schematic diagram illustrating a state in which machine learning model 14 learns the relationship between the evaluation index data and the corresponding control parameter and outputs the control parameter in which the evaluation index data is predicted to be the smallest based on the learned result.

In Fig. 6, the horizontal axis represents the value of the control parameter, and the vertical axis represents the value of the evaluation index data. Furthermore, in Fig. 6, points plotted with circles are points indicating the values of the corresponding control parameters of the evaluation index data for each of the values of the evaluation index data input in the past to machine learning model 14.

As illustrated in Fig. 6, machine learning model 14 predicts the relationship between the evaluation index data and the corresponding control parameter with a certain range using the Bayesian optimization algorithm, and outputs the control parameter in which the evaluation index data is predicted to be the smallest using the predicted relationship.

Returning again to Figs. 1 and 2, the description of control parameter generation system 1 will be continued.

Output part 12 outputs the control parameter updated by control circuit 13 to production device 20 in order to store the control parameter in memory 21. Output part 12 may be, for example, an electronic component or an electronic circuit that outputs a signal.

Operation receiver 15 receives an input operation to generation device 10 by a user who uses control parameter generation system 1. Operation receiver 15 may be, for example, an input device such as a button or a keyboard.

Display 17 displays an image to be provided to a user who uses control parameter generation system 1. Display 17 may be, for example, a liquid crystal monitor, an organic electro luminescence (EL) monitor, or a cathode ray tube (CRT) monitor.

Image generation part 16 generates an image to be displayed by display 17. Image generation part 16 may be, for example, a graphic board.

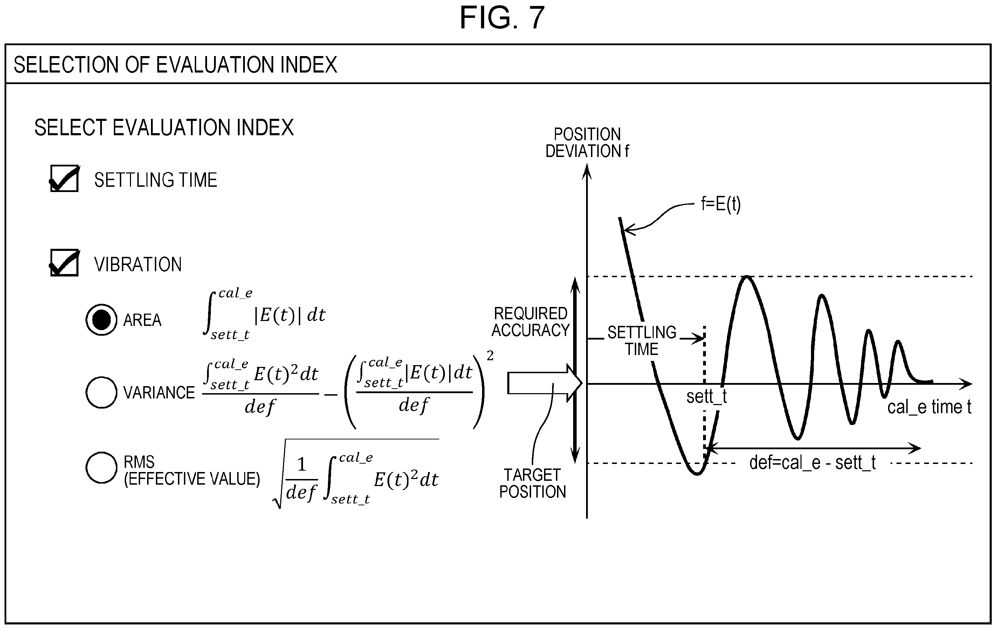

Fig. 7 is an example of an image generated by image generation part 16. Fig. 7 is an example of an image (hereinafter, also referred to as "evaluation index data specifying image") that prompts a user who uses control parameter generation system 1 to specify which evaluation index data is to be the evaluation index data generated by control circuit 13 when control parameter generation system 1 starts first control parameter adjustment processing to be described later.

As illustrated in Fig. 7, generation device 10 displays the evaluation index data specifying image on display 17 to prompt the user to specify the settling time evaluation index data or specify any one of the total area evaluation index data, the variation degree evaluation index data, and the effective value evaluation index data (hereinafter, these three evaluation index data are also referred to as "vibration evaluation index data") as the evaluation index data generated by control circuit 13.

For example, the user specifies the settling time evaluation index data as the evaluation index data by putting a check mark on the evaluation index data specifying image next to the "settling time". For example, the user puts a check mark next to "vibration" and puts a circle next to "area" on the evaluation index data specifying image, thereby specifying the summed area evaluation index data as the evaluation index data. For example, the user puts a check mark next to "vibration" and puts a circle next to "variance" on the evaluation index data specifying image, thereby specifying the variation degree evaluation index data as the evaluation index data. For example, the user puts a check mark next to "vibration" and puts a circle next to "RMS (effective value)" on the evaluation index data specifying image, thereby specifying the effective value evaluation index data as the evaluation index data.

In addition, for example, the user puts a check mark both next to "settling time" and next to "vibration" on the evaluation index data specifying image, thereby specifying the settling time evaluation index data and the vibration evaluation index data as the evaluation index data. In this case, control circuit 13 may use the sum of the value of the settling time evaluation index data and the value of the vibration evaluation index data as the value of the evaluation index data, or may use the sum of values obtained by multiplying each of the value of the settling time evaluation index data and the value of the vibration evaluation index data by a predetermined weighting coefficient as the value of the evaluation index data.

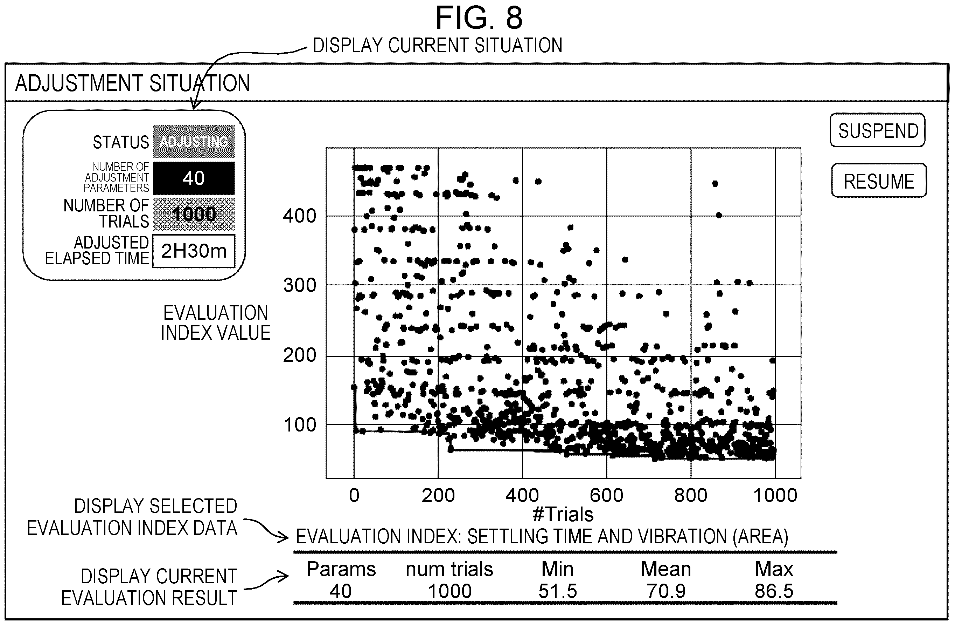

Fig. 8 is an example of an image generated by image generation part 16. Fig. 8 is an example of an image (hereinafter, also referred to as a "situation presentation image") that presents the status of the value of the evaluation index data in first control parameter adjustment processing to be described later to the user who uses control parameter generation system 1 while control parameter generation system 1 is executing the first control parameter adjustment processing.

In the graph in Fig. 8, the horizontal axis represents the number of times of control parameters sequentially output by generation device 10, and the vertical axis represents the value of the evaluation index data corresponding to each of the control parameters sequentially output by generation device 10. In the graph in Fig. 8, a solid polygonal line indicates transition of the minimum value of the value of the evaluation index data corresponding to the control parameter output by generation device 10.

As illustrated in Fig. 8, an icon (hereinafter, also referred to as a "Suspension icon") written as "Suspend" and an icon (hereinafter, also referred to as a "Resume icon") written as "Resume" are arranged in the upper right of the situation presentation image.

The suspension icon is, for example, an icon that can suspend the first control parameter adjustment processing by clicking the suspension icon when it is determined that the first control parameter adjustment processing does not need to be continued any more because the value of the evaluation index data corresponding to the control parameter output by generation device 10 is sufficiently small as a result of the user viewing the situation presentation image.

The resume icon is, for example, an icon that can continue the first control parameter adjustment processing by clicking the resume icon when it is determined that the first control parameter adjustment processing needs to be continued because the value of the evaluation index data corresponding to the control parameter output by generation device 10 is not sufficiently small as a result of the user viewing the situation presentation image.

<Operation>

An operation performed by control parameter generation system 1 having the above configuration will be described below.

Control parameter generation system 1 executes first control parameter adjustment processing for adjusting the control parameter stored in memory 21 to an appropriate value. The first control parameter adjustment processing is started, for example, when a user using control parameter generation system 1 performs an operation to start the first control parameter adjustment processing on generation device 10.

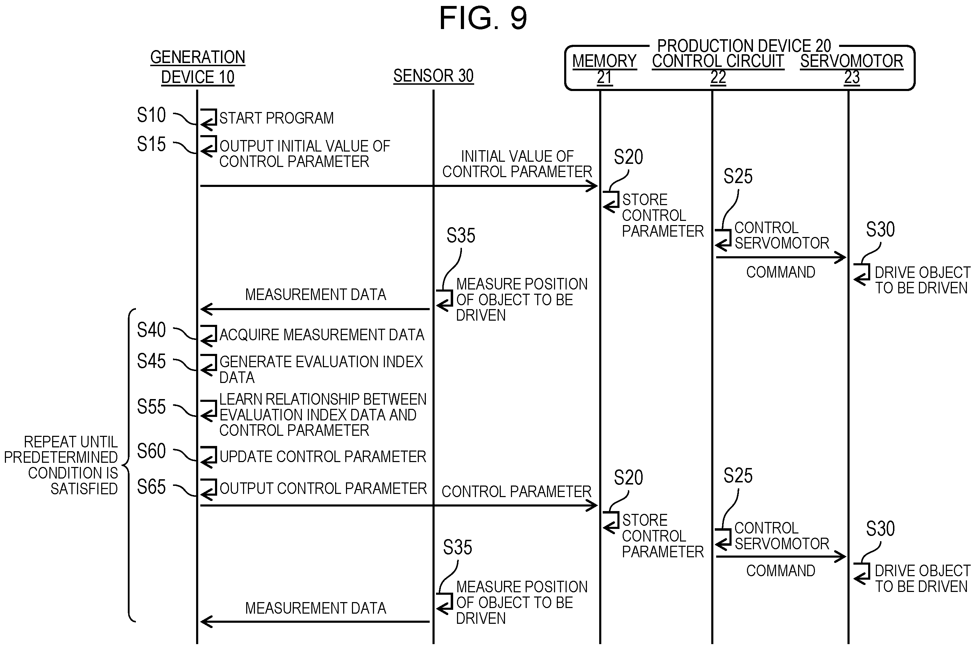

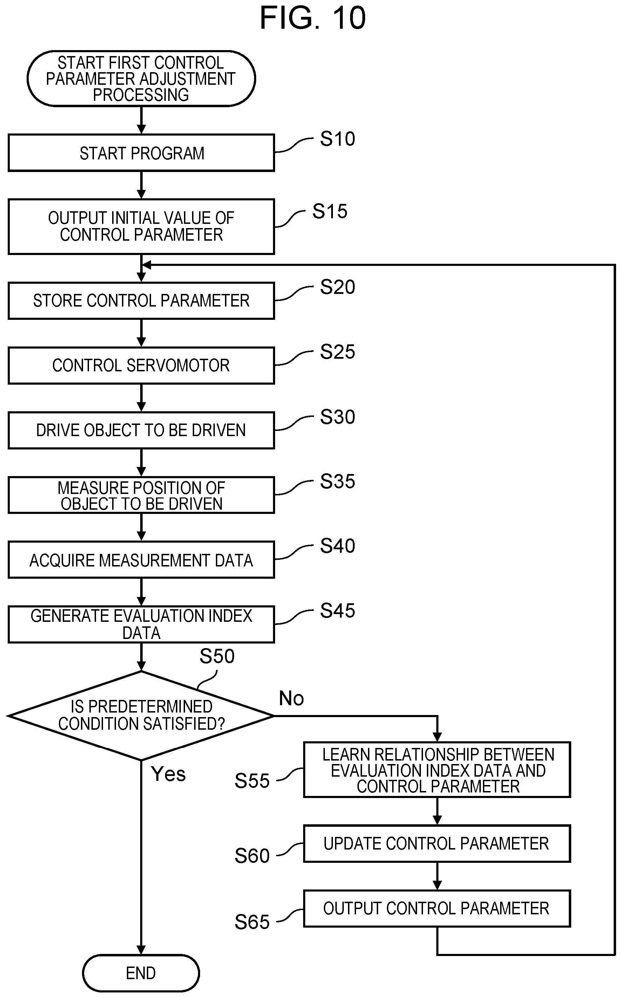

Fig. 9 is a sequence diagram of the first control parameter adjustment processing, and Fig. 10 is a flowchart of the first control parameter adjustment processing.

As illustrated in Figs. 9 and 10, when the first control parameter adjustment processing is started, generation device 10 starts a predetermined program for executing the first control parameter adjustment processing (step S10).

When the predetermined program is started, output part 12 outputs the initial value of the control parameter to memory 21 (step S15). At this time, output part 12 may output, for example, an initial value of a control parameter including a predetermined value, may output, for example, an initial value of a control parameter including a value specified by the user, or may output, for example, an initial value of a control parameter including a value calculated by a calculation method specified by the user.

When the control parameter is output from output part 12, memory 21 stores the control parameter output from output part 12 (step S20). Then, control circuit 22 generates a command for setting the position of object to be driven 24 to a predetermined target position based on the control parameter stored in memory 21, and outputs the command to servomotor 23. As a result, control circuit 22 controls servomotor 23 (step S25). Then, servomotor 23 drives object to be driven 24 based on the command output from control circuit 22 (step S30).

When object to be driven 24 is driven by servomotor 23, sensor 30 measures the position of object to be driven 24 (step S35), and outputs measurement data indicating the position of object to be driven 24 after the time at which object to be driven 24 has reached the allowable position, where it can be evaluated that object to be driven 24 has reached the predetermined target position, to input part 11. Then, input part 11 acquires the measurement data output from sensor 30 (step S40).

When input part 11 acquires the measurement data, control circuit 13 generates evaluation index data indicating the vibration of object to be driven 24 after the settling time based on the measurement data (step S45). Then, control circuit 13 checks whether or not the generation of the evaluation index data satisfies a predetermined condition (step S50). Here, the predetermined condition is, for example, a condition that the number of times of update (that is, the number of times of generation) of the evaluation index data has reached a predetermined number of times, a condition that a predetermined time has elapsed from the start of adjustment of the control parameter, or the like. Here, the predetermined number of times and the predetermined time may be determined in advance, or may be specified by a user who uses control parameter generation system 1.

In the processing of step S50, in a case where the generation of the evaluation index data does not satisfy the predetermined condition (step S50: No), control circuit 13 outputs the generated evaluation index data to machine learning model 14. Then, machine learning model 14 learns the relationship between the evaluation index data and the corresponding control parameter (step S55), and outputs the control parameter in which the value of the evaluation index data is predicted to be the smallest. Then, control circuit 13 updates the control parameter previously output by output part 12 with the control parameter newly output from machine learning model 14 (step S60). Then, output part 12 transmits the control parameter newly updated by control circuit 13 to memory 21 (step S65).

Upon completion of the processing in step S65, control parameter generation system 1 proceeds to the process of step S20 and repeats the processing of step S20 and subsequent steps.

In the processing of step S50, when the generated evaluation index data satisfies the predetermined condition (step S50: Yes), control parameter generation system 1 ends the first control parameter adjustment processing.

<Consideration>

As described above, control parameter generation system 1 having the above configuration executes the first control parameter adjustment processing to repeatedly generate the control parameter until the generation of the evaluation index value data satisfies the predetermined condition, thereby adjusting the control parameter.

Therefore, according to control parameter generation system 1, it is possible to generate an appropriate control parameter in a relatively short time without being performed by a skilled technician.

(Second exemplary embodiment)

Hereinafter, a control parameter generation system according to a second exemplary embodiment configured by partially changing the configuration from control parameter generation system 1 according to the first exemplary embodiment will be described.

Control parameter generation system 1 is an example of a system in which sensor 30 measures the position of object to be driven 24 and outputs measurement data, and generation device 10 acquires the measurement data output from sensor 30.

On the other hand, in the control parameter generation system according to the second exemplary embodiment, the sensor with a processing device according to the second exemplary embodiment measures the position of object to be driven 24 and outputs the evaluation index data, and a generation device according to the second exemplary embodiment acquires the evaluation index data output from the sensor with a processing device according to the second exemplary embodiment.

Here, in the control parameter generation system according to the second exemplary embodiment, components similar to those of control parameter generation system 1 have already been described and are denoted by the same reference numerals, detailed description thereof is omitted, and differences from control parameter generation system 1 will be mainly described.

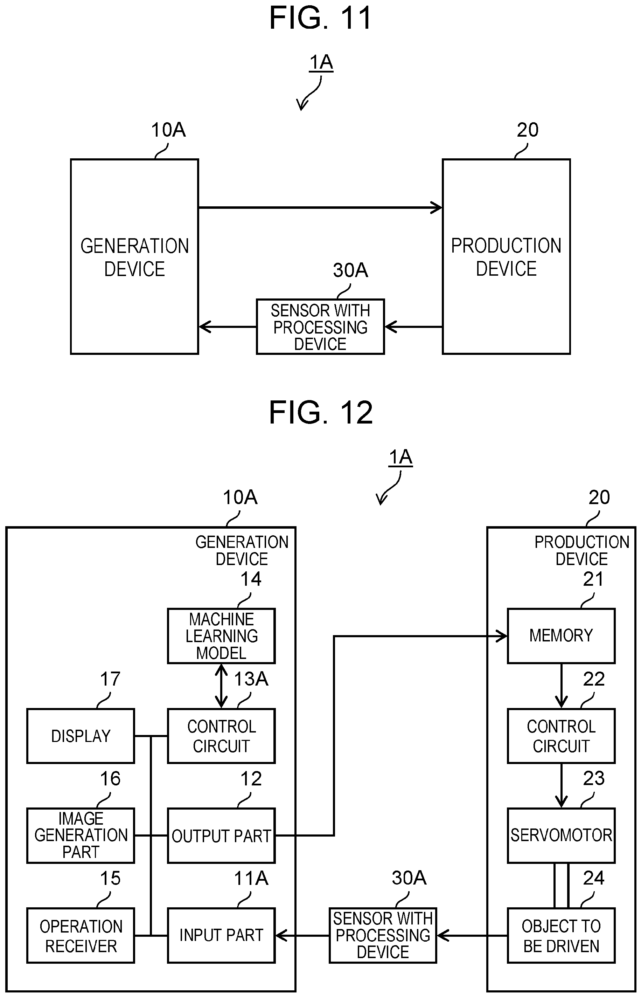

Fig. 11 is a schematic diagram illustrating an outline of control parameter generation system 1A according to the second exemplary embodiment.

Fig. 12 is a block diagram illustrating a configuration of control parameter generation system 1A.

As illustrated in Fig. 11, control parameter generation system 1A is configured such that from control parameter generation system 1 according to the first exemplary embodiment, generation device 10 is changed to generation device 10A and sensor 30 is changed to sensor 30A with a processing device. As illustrated in Fig. 12, generation device 10A is configured such that from generation device 10, input part 11 is changed to input part 11A, and control circuit 13 is changed to control circuit 13A.

Sensor 30A with a processing device measures the position of object to be driven 24. Then, sensor 30A with a processing device generates measurement data indicating the position of object to be driven 24 after the time at which object to be driven 24 has reached an allowable position, where it can be evaluated that object to be driven 24 has reached the predetermined target position. Further, sensor 30A with a processing device generates evaluation index data indicating the vibration of object to be driven 24 after the settling time based on the generated measurement data, and outputs the generated evaluation index data to generation device 10A.

Sensor 30A with a processing device is implemented, for example, in a computer device including a sensing device that measures the position of object to be driven 24, a processor, a memory, and an input/output interface, by the processor executing a program stored in the memory. Such a computer device is, for example, a personal computer (personal computer).

Alternatively, sensor 30A with a processing device may include, for example, an image processing device. In this case, sensor 30A with a processing device may measure the position of object to be driven 24 by performing image processing on the image of object to be driven 24 using an image processing device, for example.

Input part 11A acquires the evaluation index data output from sensor 30A with a processing device.

Control circuit 13A updates the control parameter using machine learning model 14 that learns the relationship between the evaluation index data and the control parameter based on the evaluation index data acquired by input part 11A.

<Operation>

An operation performed by control parameter generation system 1A having the above configuration will be described below.

Control parameter generation system 1A performs second control parameter adjustment processing in which some processing is changed from the first control parameter adjustment processing according to the first exemplary embodiment.

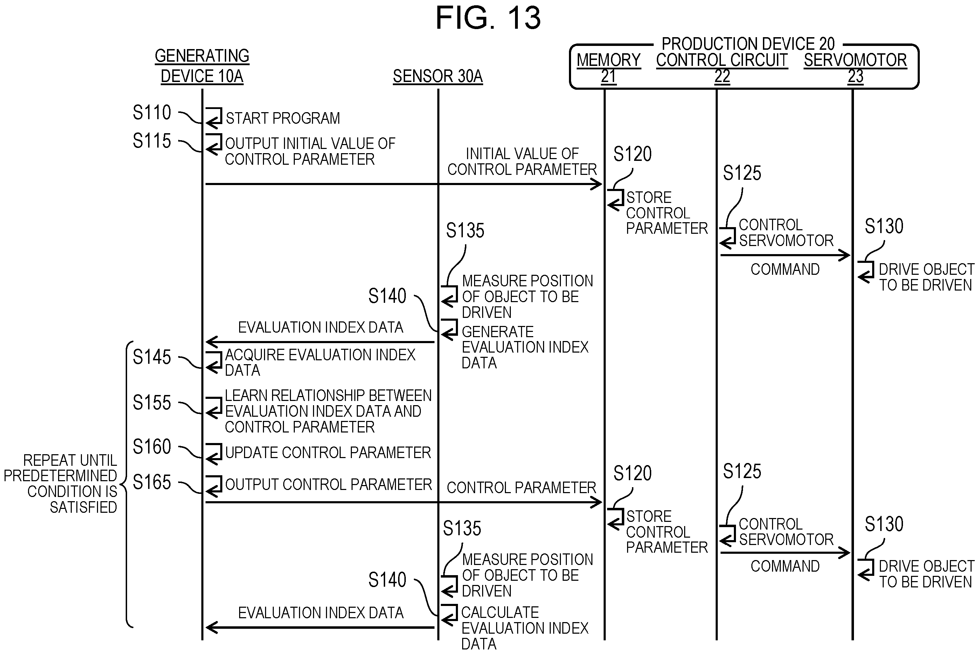

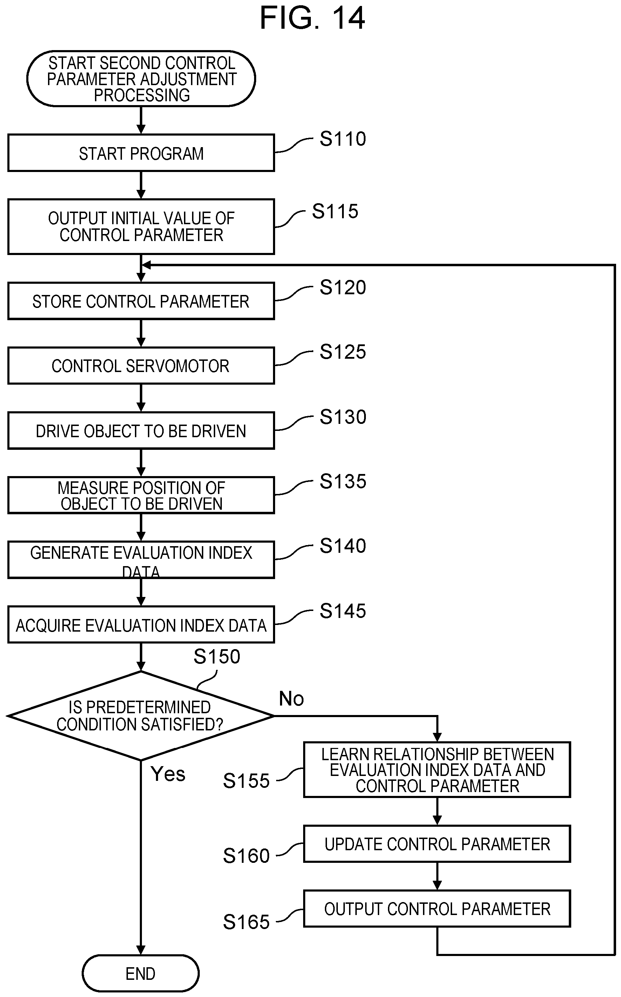

Fig. 13 is a sequence diagram of the second control parameter adjustment processing, and Fig. 14 is a flowchart of the second control parameter adjustment processing.

As illustrated in Figs. 13 and 14, the second control parameter adjustment processing includes processing of step S110 to processing of step S165. Among these processing, the processing from step S110 to step S130 and the processing from step S150 to step S165 are processing similar to the processing from step S10 to step S30 and the processing from step S50 to step S65 in the first control parameter adjustment processing, respectively.

Therefore, here, the processing of step S135 to the processing of step S145 will be mainly described.

Upon completion of the processing in step S130, sensor 30A with a processing device measures the position of object to be driven 24 (step S135), and generates measurement data indicating the position of object to be driven 24 after the time at which object to be driven 24 has reached the allowable position, where it can be evaluated that object to be driven 24 has reached the predetermined target position. Then, sensor 30A with a processing device generates evaluation index data indicating the vibration of object to be driven 24 after the settling time based on the generated measurement data (step S140), and outputs the generated evaluation index data to input part 11A. Then, input part 11A acquires the evaluation index data output from sensor 30A with a processing device (step S145).

Upon completion of the processing in step S145, control parameter generation system 1A proceeds to the processing of step S150.

In the processing of step S150, when the generation of the evaluation index data satisfies the predetermined condition (step S150: Yes), control parameter generation system 1A ends the second control parameter adjustment processing.

<Consideration>

As described above, similarly to control parameter generation system 1 according to the first exemplary embodiment, control parameter generation system 1A having the above-described configuration executes the second control parameter adjustment processing to repeatedly generate the control parameter until generation of the evaluation index value data satisfies a predetermined condition, thereby adjusting the control parameter.

Therefore, according to control parameter generation system 1A, similarly to control parameter generation system 1, an appropriate control parameter can be generated in a relatively short time without being performed by a skilled technician.

(Third exemplary embodiment)

Hereinafter, a control parameter generation system according to a third exemplary embodiment configured by partially changing the configuration from control parameter generation system 1 according to the first exemplary embodiment will be described.

The control parameter generation system according to the third exemplary embodiment is an example of a system that interrupts the update of the control parameter in a case where the vibration indicated by the evaluation index data exceeds a predetermined threshold while the control parameter is adjusted, and thereafter resumes the interrupted update of the control parameter in a case where the vibration indicated by the evaluation index data becomes equal to or less than the predetermined threshold.

Here, in the control parameter generation system according to the third exemplary embodiment, components similar to those of control parameter generation system 1 have already been described and are denoted by the same reference numerals, detailed description thereof is omitted, and differences from control parameter generation system 1 will be mainly described.

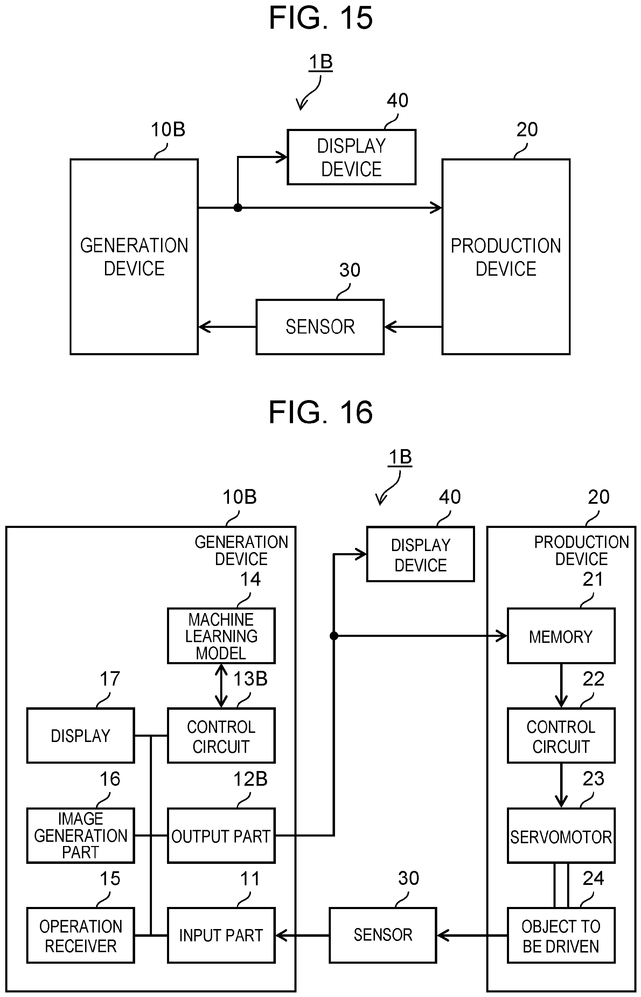

Fig. 15 is a schematic diagram illustrating an outline of control parameter generation system 1B according to the third exemplary embodiment.

Fig. 16 is a block diagram illustrating a configuration of control parameter generation system 1B.

As illustrated in Fig. 15, control parameter generation system 1B is configured such that from control parameter generation system 1 according to the first embodiment, generation device 10 is changed to generation device 10B and display device 40 is added. As illustrated in Fig. 16, generation device 10B is configured such that from generation device 10, output part 12 is changed to output part 12B, and control circuit 13 is changed to control circuit 13B. Note that display device 40 may be provided separately from generation device 10B, but may be included in generation device 10B. In addition, display device 40 and display 17 may be the same. In a case where display device 40 is included as a part of display 17, for example, display 17 may include a plurality of display devices, and display device 40 may be one of the plurality of display devices. In addition, the information indicated by display device 40 may be displayed on display 17.

Control circuit 13B performs an operation similar to the operation performed by control circuit 13, and further performs the following operation.

After generating the evaluation index data, control circuit 13B determines whether or not the vibration of object to be driven 24 indicated by the generated evaluation index data exceeds a predetermined threshold.

Control circuit 13B updates the control parameter using machine learning model 14 when the vibration of object to be driven 24 indicated by the evaluation index data is equal to or less than the predetermined threshold, and interrupts the update of the control parameter when the vibration of object to be driven 24 indicated by the evaluation index data exceeds the predetermined threshold.

Further, when the vibration of object to be driven 24 indicated by the evaluation index data becomes equal to or less than the predetermined threshold after control circuit 13 interrupts the update of the control parameter, the control circuit resumes the interrupted update of the control parameter based on the evaluation index data generated based on the measurement data acquired after the time at which the vibration of object to be driven 24 indicated by the evaluation index data becomes equal to or less than the predetermined threshold.

When generating the evaluation index data, control circuit 13B generates the evaluation index data in association with the generation time of the evaluation index data. Then, control circuit 13B updates the adjustment history based on the generated evaluation index data and the generation time of the evaluation index data.

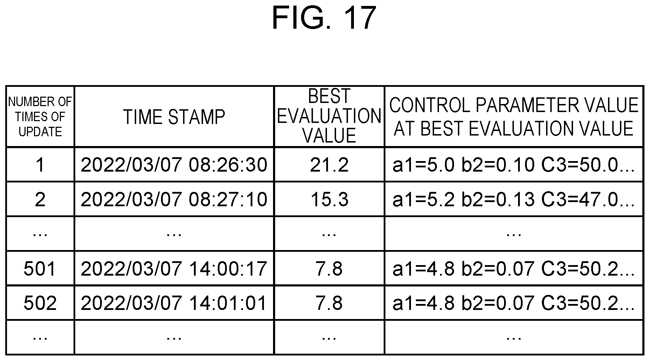

Fig. 17 is a data configuration diagram illustrating an example of a data configuration of an adjustment history updated by control circuit 13B.

As illustrated in Fig. 17, as an example, the adjustment history is configured by associating the number of times of update, a time stamp, a best evaluation value, and a control parameter value at the time of the best evaluation value.

The number of times of update is the number of times control circuit 13B has generated the control parameter after the control parameter generation system 1B starts adjusting the control parameter, that is, the number of times control circuit 13B has updated the control parameter.

The time stamp is a generation time of evaluation index data when control circuit 13B generates the evaluation index data of the number of times indicated by the corresponding number of times of update.

The best evaluation value is a value (here, the value of the minimum evaluation index data) of the best evaluation index data generated by control circuit 13B by the time indicated by the corresponding time stamp after control parameter generation system 1B starts the adjustment of the control parameter.

The control parameter value at the time of the best evaluation value is a value of the control parameter when control circuit 13B calculates the corresponding best evaluation value.

Returning again to Figs. 15 and 16, the description of control parameter generation system 1B will be continued.

Output part 12B performs an operation similar to the operation performed by output part 12, and further performs the following operation.

When control circuit 13B updates the adjustment history, output part 12B outputs the updated adjustment history to display device 40.

When control circuit 13B determines that the vibration of object to be driven 24 indicated by the evaluation index data exceeds the predetermined threshold, output part 12B outputs a message (hereinafter, also referred to as an "update interruption message") indicating that the update of the control parameter is interrupted to display device 40.

Display device 40 generates and displays an image based on the data and the message output from output part 12B.

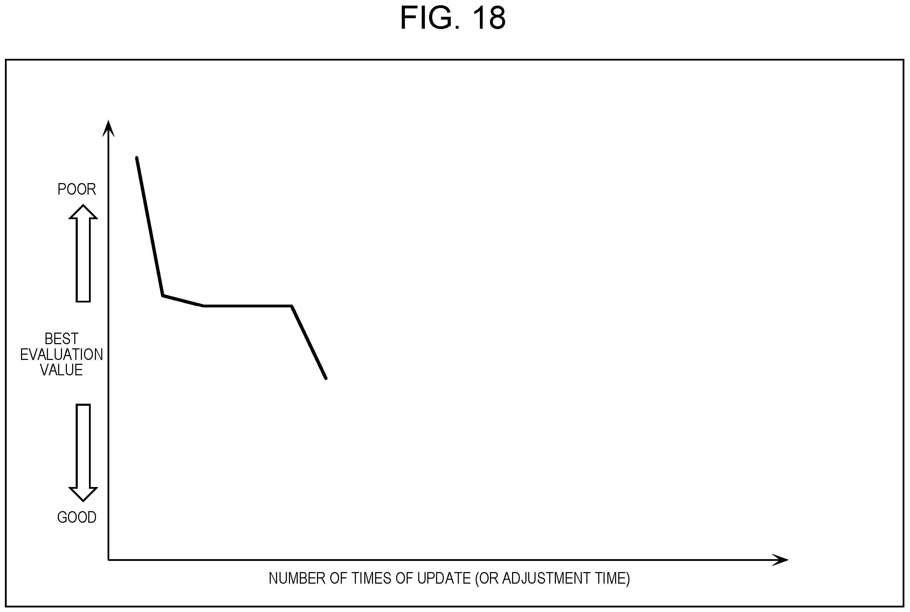

Fig. 18 is an example of an image displayed by display device 40. Fig. 18 is an example of an image (hereinafter, also referred to as a "best evaluation value transition image") indicating the transition of the best evaluation value displayed when the adjustment history is transmitted from output part 12B.

In Fig. 18, the horizontal axis represents the number of times of update of the control parameter or the elapsed time (adjustment time) from the start of adjustment of the control parameter, and the vertical axis represents the best evaluation value.

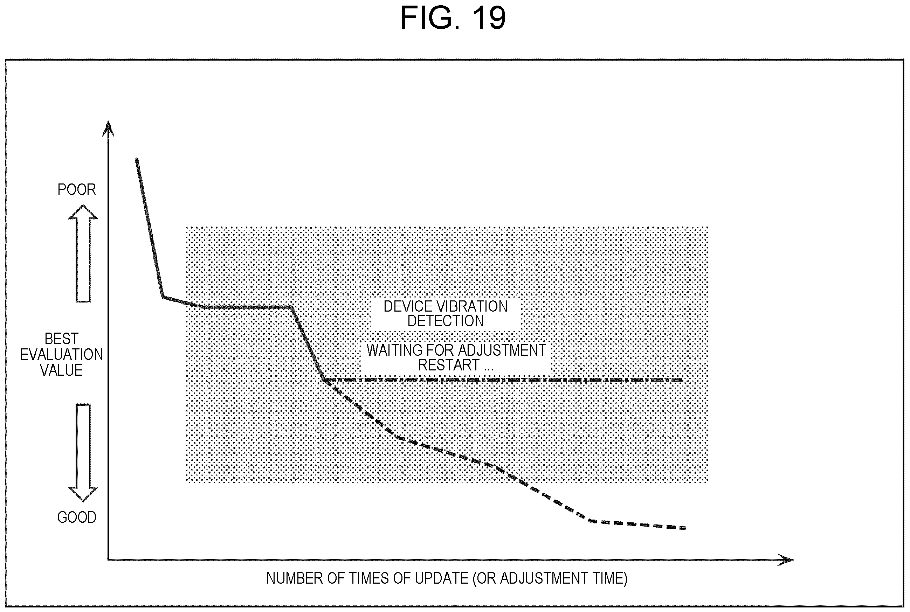

Fig. 19 is another example of the image displayed by display device 40. Fig. 19 is an example of an image displayed when the update interruption message is transmitted from output part 12B in a case where the best evaluation value transition image is displayed, and is an image in which a message image indicating the content of the update interruption message is superimposed and displayed on the displayed best evaluation value transition image.

The broken line in Fig. 19 is a virtual line indicating the transition of the best evaluation value when the adjustment of the control parameter ideally progresses, and is not actually displayed in the adjustment restart time point specifying image.

The alternate long and short dash line in Fig. 19 is a virtual line indicating the transition of the expected best evaluation value in a case where the adjustment of the control parameter is not interrupted, and is not actually displayed in the adjustment restart time point specifying image.

As indicated by the broken line and the alternate long and short dash line, in a case where the adjustment of the control parameter is not interrupted even though the vibration of object to be driven 24 indicated by the evaluation index data exceeds the predetermined threshold, it is predicted that the adjustment of the control parameter does not ideally proceed, and there is a possibility that the adjustment of the control parameter satisfying the user who uses control parameter generation system 1B cannot be implemented.

The user can visually recognize that the update of the control parameter is not interrupted when display device 40 displays the message image without superimposing the message image on the best evaluation value transition image.

In addition, the user can visually recognize that the update of the control parameter is interrupted when display device 40 displays the message image superimposed on the best evaluation value transition image.

<Operation>

An operation performed by control parameter generation system 1B having the above configuration will be described below.

Control parameter generation system 1B performs third control parameter adjustment processing in which some processing is changed from the first control parameter adjustment processing according to the first exemplary embodiment.

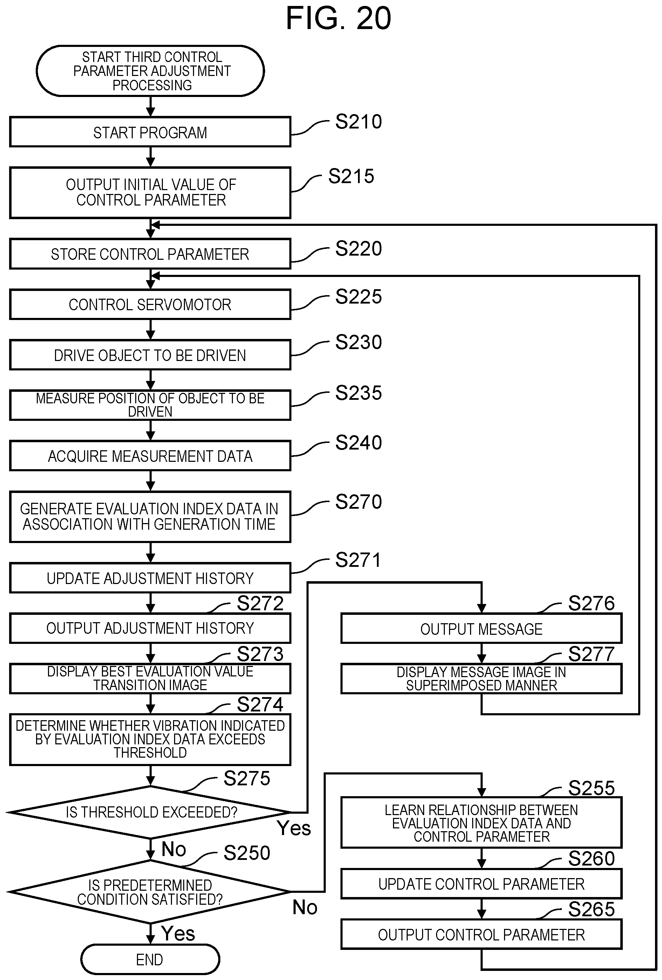

Fig. 20 is a flowchart of the third control parameter adjustment processing.

As illustrated in Fig. 20, the third control parameter adjustment processing includes processing of step S210 to processing of step S277. Among these processing, the processing from step S210 to step S240 and the processing from step S250 to step S265 are processing similar to the processing from step S10 to step S40 and the processing from step S50 to step S65 in the first control parameter adjustment processing, respectively.

Therefore, here, the processing of step S270 to the processing of step S277 will be mainly described.

Upon completion of the processing in step S240, control circuit 13B generates evaluation index data indicating the vibration of object to be driven 24 after the settling time in association with the generation time of the evaluation index data based on the measurement data (step S270). Then, control circuit 13B updates the adjustment history based on the generated evaluation index data and the generation time of the evaluation index data (step S271).

When the adjustment history is updated, output part 12B outputs the updated adjustment history to display device 40 (step S272). Then, display device 40 displays the best evaluation value transition image on the basis of the adjustment history (step S273).

On the other hand, control circuit 13B determines whether or not the vibration of object to be driven 24 indicated by the generated evaluation index data exceeds a predetermined threshold (step S274).

When control circuit 13B determines that the vibration of object to be driven 24 indicated by the generated evaluation index data exceeds the predetermined threshold (step S275: Yes), output part 12B outputs an update interruption message to display device 40 (step S276). Then, display device 40 superimposes and displays a message image indicating the content of the update interruption message on the best evaluation value transition image (step S277).

Upon completion of the processing in step S277, control parameter generation system 1B proceeds to the processing of step S225.

In the processing of step S275, when control circuit 13B determines that the vibration of object to be driven 24 indicated by the generated evaluation index data does not exceed the predetermined threshold (step S275: No), control parameter generation system 1B proceeds to the processing of step S250.

<Consideration>

As described above, according to control parameter generation system 1B having the above configuration, when the vibration of object to be driven 24 indicated by the evaluation index data exceeds the predetermined threshold, the update of the control parameter is interrupted, so that it is possible to suppress the vibration of production device 20 in the period in which the control parameter is adjusted from adversely affecting the adjustment of the control parameter.

Therefore, according to control parameter generation system 1B having the above configuration, it is possible to suppress the frequency at which the control parameter needs to be adjusted again.

(Fourth exemplary embodiment)

Hereinafter, a control parameter generation system according to a fourth exemplary embodiment configured by partially changing the configuration from control parameter generation system 1B according to the third exemplary embodiment will be described.

In control parameter generation system 1B, sensor 30 measures the position of object to be driven 24 and outputs the measurement data, and generation device 10B acquires the measurement data output from sensor 30.

On the other hand, the control parameter generation system according to the fourth exemplary embodiment is an example of a system in which the sensor with a processing device according to the fourth exemplary embodiment measures the position of object to be driven 24 and outputs the evaluation index data, and the generation device according to the fourth exemplary embodiment acquires the evaluation index data output from the sensor with a processing device according to the fourth exemplary embodiment.

Here, in the control parameter generation system according to the fourth exemplary embodiment, components similar to those of control parameter generation system 1B have already been described and are denoted by the same reference numerals, detailed description thereof is omitted, and differences from control parameter generation system 1B will be mainly described.

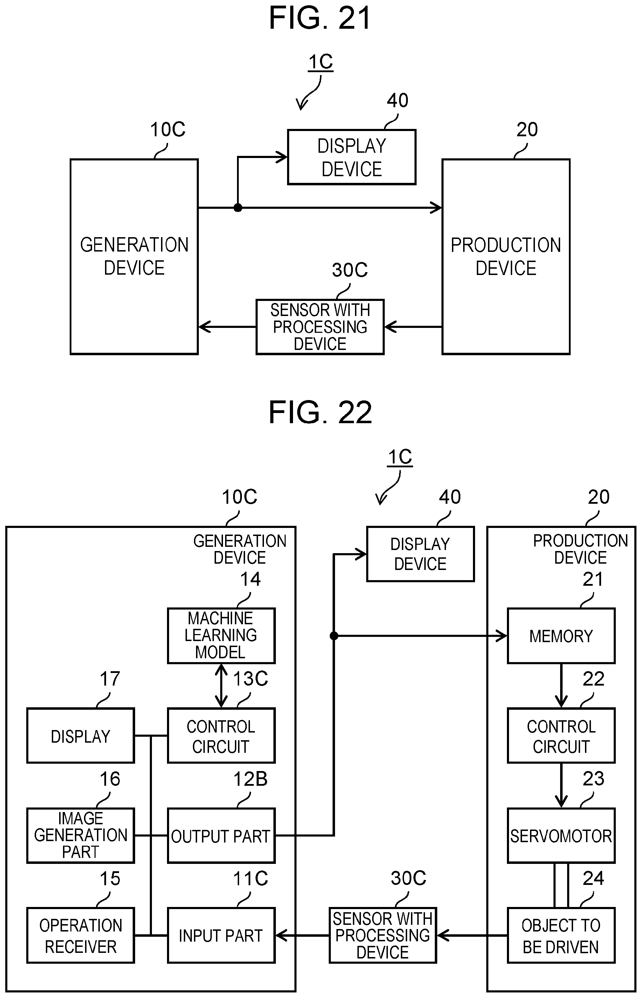

Fig. 21 is a schematic diagram illustrating an outline of control parameter generation system 1C according to the fourth exemplary embodiment.

Fig. 22 is a block diagram illustrating a configuration of control parameter generation system 1C.

As illustrated in Fig. 21, control parameter generation system 1C is configured such that from control parameter generation system 1B according to the third exemplary embodiment, generation device 10B is changed to generation device 10C and sensor 30 is changed to sensor 30C with a processing device. As illustrated in Fig. 22, generation device 10C is configured such that from generation device 10B, input part 11 is changed to input part 11C and control circuit 13B is changed to control circuit 13C.

Sensor 30C with a processing device performs an operation similar to the operation performed by sensor 30A with a processing device, and further performs the following operation.

When generating the evaluation index data, sensor 30C with a processing device generates evaluation index data in association with the generation time of the evaluation index data. Then, when outputting the generated evaluation index data to generation device 10C, sensor 30C with a processing device outputs the generation time of the generated evaluation index data in association with the evaluation index data.

Input part 11C performs an operation similar to the operation performed by input part 11, and further performs the following operation.

Input part 11C acquires the evaluation index data output from sensor 30C with a processing device in association with the generation time of the evaluation index data.

Control circuit 13C performs an operation similar to the operation performed by control circuit 13B, and further performs the following operation.

When input part 11C acquires the evaluation index data in association with the generation time of the evaluation index data without acquiring the measurement data from sensor 30C with a processing device, control circuit 13C acquires the evaluation index data acquired by input part 11C in association with the generation time of the evaluation index data instead of generating the evaluation index data in association with the evaluation index data generation time based on the measurement data.

<Operation>

An operation performed by control parameter generation system 1C having the above configuration will be described below.

Control parameter generation system 1C performs fourth control parameter adjustment processing in which some processing is changed from the third control parameter adjustment processing according to the third exemplary embodiment.

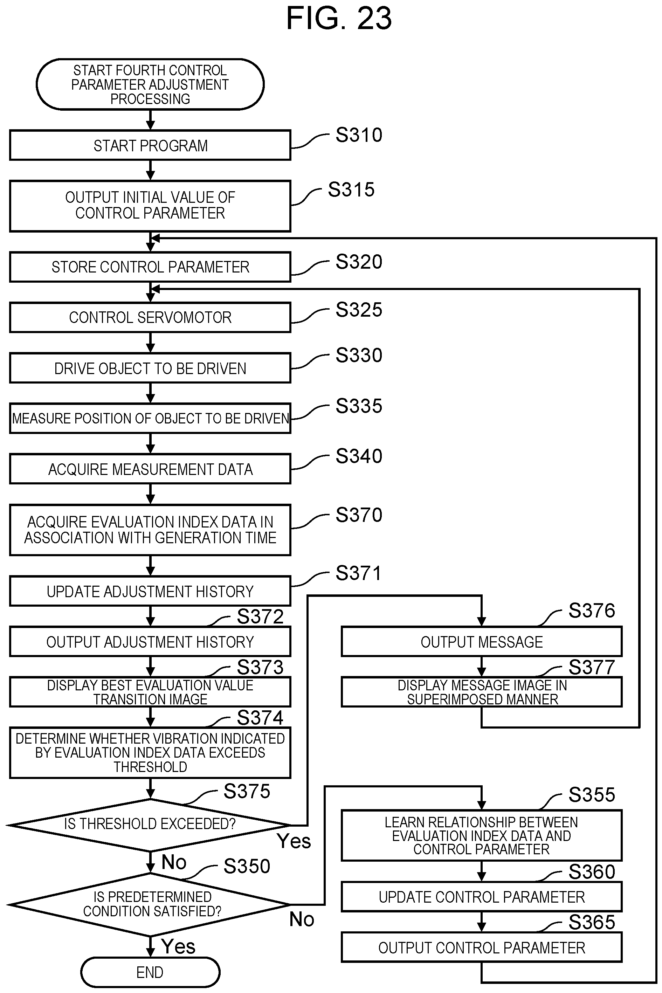

Fig. 23 is a flowchart of the fourth control parameter adjustment processing.

As illustrated in Fig. 23, the fourth control parameter adjustment processing includes processing of step S310 to processing of step S377. Among these processing, the processing from step S310 to step S330, the processing from step S350 to step S365, and the processing from step S371 to step S377 are processing similar to the processing from step S210 to step S230, the processing from step S250 to step S265, and the processing from step S271 to step S277 in the third control parameter adjustment processing, respectively.

Therefore, here, the processing of step S335 to the processing of step S340 and the processing of step S370 will be mainly described.

Upon completion of the processing in step S330, sensor 30C with a processing device measures the position of object to be driven 24 (step S335), and generates measurement data indicating the position of object to be driven 24 after the time at which object to be driven 24 has reached the allowable position, where it can be evaluated that object to be driven 24 has reached the predetermined target position. Then, sensor 30C with a processing device generates, based on the generated measurement data, the evaluation index data indicating the vibration of object to be driven 24 after the settling time in association with the generation time of the evaluation index data (step S340), and outputs the generated evaluation index data to input part 11C in association with the generation time of the evaluation index data. Then, input part 11C acquires the evaluation index data output from sensor 30C with a processing device in association with the generation time of the evaluation index data (step S370). Then, control circuit 13C updates the adjustment history based on the acquired evaluation index data and the generation time of the evaluation index data (step S371).

Upon completion of the processing in step S371, control parameter generation system 1C proceeds to the processing of step S372.

<Consideration>

According to control parameter generation system 1C having the above configuration, similarly to control parameter generation system 1B according to the third exemplary embodiment, when the vibration of object to be driven 24 indicated by the evaluation index data exceeds the predetermined threshold, the update of the control parameter is interrupted, so that it is possible to suppress the vibration of production device 20 in the period in which the control parameter is adjusted from adversely affecting the adjustment of the control parameter.

Therefore, according to control parameter generation system 1C having the above configuration, it is possible to suppress the frequency at which the control parameter needs to be adjusted again.

(Supplementary)

As described above, the technology disclosed in the present application has been described based on the first to fourth exemplary embodiments. However, the present disclosure is not limited to the first to fourth exemplary embodiments. Configurations in which various modifications conceived by those skilled in the art are applied to the present exemplary embodiment or the present modification, and configurations constructed by combining components in different exemplary embodiments or modifications may also be included within the scope of one or more aspects of the present disclosure without departing from the gist of the present disclosure.

(1) In the first exemplary embodiment, as an example, generation device 10 is described as being implemented by one computer device. However, generation device 10 is not necessarily limited to an example implemented by one computer device as long as the same function can be implemented. Generation device 10 may be implemented by, for example, a plurality of computer devices capable of communicating with each other.

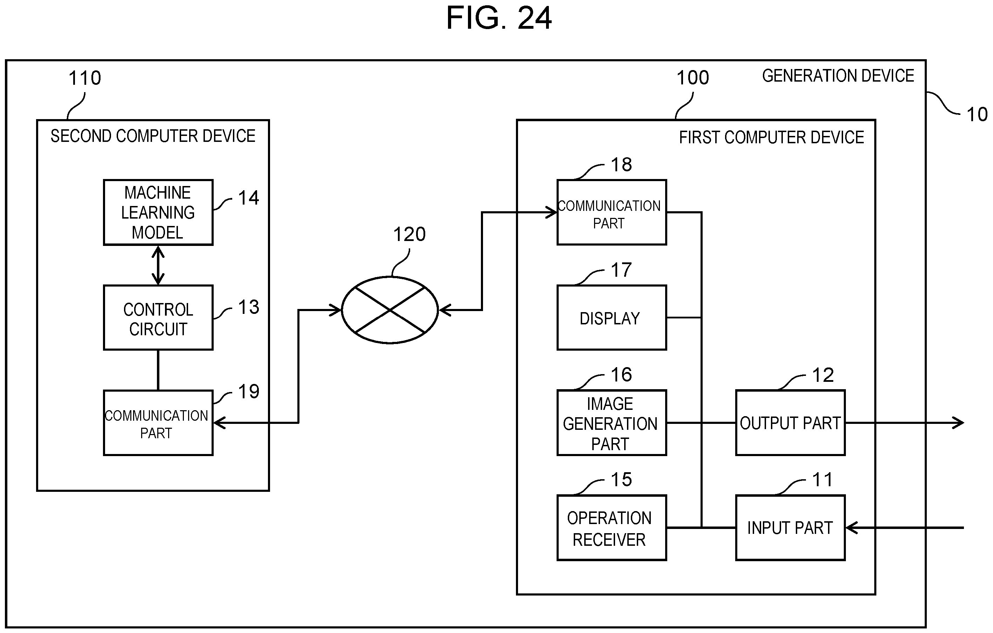

Fig. 24 is a block diagram illustrating an example of a configuration of generation device 10 in a case where generation device 10 is implemented by a plurality of computer devices capable of communicating with each other.

As illustrated in Fig. 24, generation device 10 may be implemented by (1) first computer device 100 including input part 11, output part 12, operation receiver 15, image generation part 16, display 17, and communication part 18, (2) second computer device 110 including control circuit 13, machine learning model 14, and communication part 19, and (3) network 120 that communicably connects communication part 18 and communication part 19.

In this case, first computer device 100 may be, for example, a personal computer (personal computer), and second computer device 110 may be a server.

(2) In the first exemplary embodiment, control parameter generation system 1 has been described as having a configuration in which (i) sensor 30 measures the position of object to be driven 24 and outputs measurement data indicating the position of object to be driven 24 after the time at which object to be driven 24 has reached the allowable position, where it can be evaluated that object to be driven 24 has reached the predetermined target position, and (ii) input part 11 acquires the measurement data output from sensor 30.

However, the above configuration of control parameter generation system 1 is an example, and control parameter generation system 1 is not necessarily limited to the above configuration as long as input part 11 can acquire measurement data indicating the position of object to be driven 24 after the time at which object to be driven 24 has reached the allowable position, where it can be evaluated that object to be driven 24 has reached the predetermined target position.

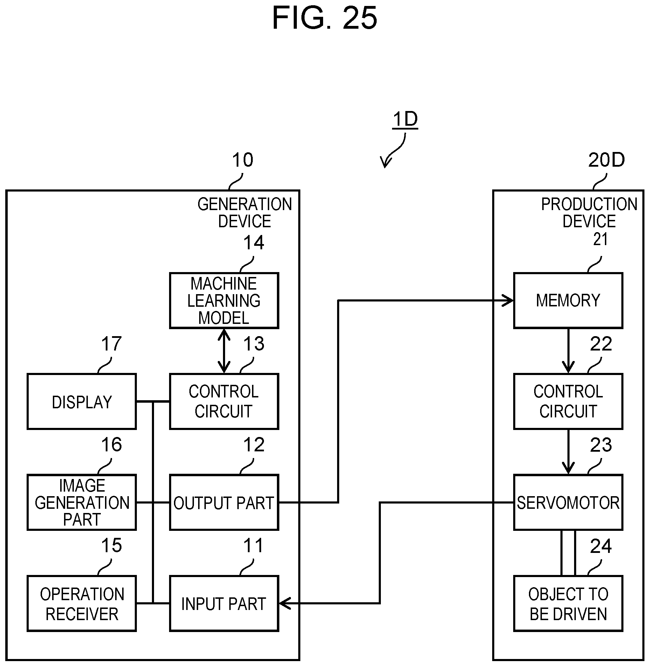

Fig. 25 is a block diagram illustrating a configuration of control parameter generation system 1D that is an example of another configuration of control parameter generation system 1 and does not include sensor 30.

In control parameter generation system 1D, servomotor 23 incorporates a sensor that detects a motor position (for example, when servomotor 23 is a rotary motor, the rotational position of servomotor 23). Then, servomotor 23 outputs an encoded value representing the motor position of servomotor 23 detected by the built-in sensor. That is, production device 20D outputs the encoded value.

In general, such a sensor that detects the position of the motor is also referred to as an encoder. Normally, the servomotor includes an encoder.

Here, the position of servomotor 23 indicated by the encoded value has a one-to-one correspondence relationship with the position of object to be driven 24. Therefore, the encoded value output from servomotor 23 represents the position of servomotor 23 and also represents the position of object to be driven 24. Therefore, it can be said that the sensor incorporated in servomotor 23 also detects the position of object to be driven 24 and outputs an encoded value representing the position of object to be driven 24.

Then, in control parameter generation system 1D, input part 11 acquires the encoded value output from servomotor 23 as measurement data.

(3) A general or specific mode of the present disclosure may be implemented by a system, a device, a method, an integrated circuit, a program, or a computer-readable, non-transitory recording medium such as a CD-ROM. In addition, the present invention may be implemented by an arbitrary combination of a system, a device, a method, an integrated circuit, a program, and a non-transitory recording medium. For example, the present disclosure may be implemented as a program for causing a computer device to execute processing performed by a generation device.

(4) Production device 20, 20D of the present disclosure may incorporate generation device 10, 10A to 10C. Production device 20, 20D of the present disclosure may incorporate control parameter generation system 1, 1A to 1D. Display device 40 may be disposed separately from generation device 10, 10A to 10C, or may be disposed independently of generation device 10, 10A to 10C. Furthermore, display device 40 may be incorporated in production device 20, 20D. Further, sensor 30 and sensor 30A, 30C with a processing device may be disposed separately from production device 20, 20D, or may be disposed independently of production device 20, 20D. Furthermore, sensor 30 and sensor 30A, 30C with a processing device may be incorporated in generation device 10, 10A to 10C and arranged. Furthermore, production device 20, 20D of the present disclosure is not limited to devices that produce products, and may include facilities, plants, and factories that produce products. The present disclosure can also be applied to a conveyance device in addition to production device 20, 20D. Control parameter generation system 1, 1A to 1D of the present disclosure can also be applied to a device, a facility, a plant, a warehouse, or a factory that produces a product.

INDUSTRIAL APPLICABILITY

The present disclosure is widely applicable to a system that generates control parameters, and the like.

REFERENCE MARKS IN THE DRAWINGS

1, 1A, 1B, 1C, 1D: control parameter generation system
10, 10A, 10B, 10C: generation device
11, 11A, 11C: input part
12, 12B: output part
13, 13A, 13B, 13C: control circuit
14: machine learning model
15: operation receiver
16: image generation part
17: display
18, 19: communication part
20, 20D: production device
21: memory
22: control circuit
23: servomotor
24: object to be driven
30: sensor
30A, 30C: sensor with processing device
40: display device
100: first computer device
110: second computer device
120: network

**Claims**

**1.** A control parameter generation method for generating a control parameter by a control parameter generation device and used by a production device while a sensor checks a state of the production device,

the production device including:

a servomotor,
a control circuit that controls the servomotor,
a memory that stores the control parameter to be used when the control circuit controls the servomotor, and
an object to be driven by the servomotor,

the control parameter generation method comprising:

measuring, by the sensor, a position of the object to be driven after a time at which the object to be driven has reached an allowable position, where the object to be driven is evaluated to have reached a predetermined target position, based on a command for setting the position of the object to be driven to the predetermined target position, and outputting measurement data indicating the position;

acquiring the measurement data indicating the position output from the sensor;

generating, based on the measurement data, evaluation index data indicating vibration of the object to be driven after a time at which the object to be driven has reached the allowable position;

updating, based on the evaluation index data, the control parameter using a machine learning model that learns a relationship between the evaluation index data and the control parameter in a case where vibration indicated by the evaluation index data is equal to or less than a predetermined threshold;

outputting the updated control parameter to the production device in order to store the updated control parameter in the memory; and

interrupting update of the control parameter when the vibration indicated by the evaluation index data exceeds the predetermined threshold.

2.  The control parameter generation method according to Claim 1, further comprising outputting, to a display device, a message indicating that the update of the control parameter is interrupted when the vibration indicated by the evaluation index data exceeds the predetermined threshold.

3.  The control parameter generation method according to Claim 1, further comprising resuming the interrupted update of the control parameter based on the evaluation index data generated based on the measurement data acquired after the time when the vibration indicated by the evaluation index data becomes equal to or less than the predetermined threshold in a case where the vibration indicated by the evaluation index data becomes equal to or less than the predetermined threshold after the update of the control parameter is interrupted.

4.  The control parameter generation method according to Claim 1, wherein the production device includes any one of a mounting device, a processing device, and a machining device.

5.  A program for causing a computer of an information processing device connected to the production device to execute the control parameter generation method according to any one of Claims 1 to 4.

6.  A recording medium recording a program for causing a computer of an information processing device connected to the production device to execute the control parameter generation method according to any one of Claims 1 to 4.

7.  A control parameter generation device that generates a control parameter used by a production device while a sensor confirms a state of the production device,

the production device including, a servomotor, a first control circuit that controls the servomotor, a memory that stores a control parameter used when the first control circuit controls the servomotor, and an object to be driven driven by the servomotor,

the sensor measuring a position of the object to be driven after a time at which the object to be driven has reached an allowable position, where the object to be driven is evaluated to have reached a predetermined target position, based on a command for setting the position of the object to be driven to the predetermined target position, and outputting measurement data indicating the position, and

the control parameter generation device comprising:

an input part that acquires measurement data indicating the position output from the sensor;

a second control circuit that generates, based on the measurement data, evaluation index data indicating vibration of the object to be driven after a time at which the object to be driven has reached the allowable position, and updates, based on the evaluation index data, the control parameter using a machine learning model that learns a relationship between the evaluation index data and the control parameter in a case where the vibration indicated by the evaluation index data is equal to or less than a predetermined threshold; and

an output part that outputs the updated control parameter to the production device in order to store the updated control parameter in the memory,

wherein the second control circuit further interrupts the update of the control parameter when the vibration indicated by the evaluation index data exceeds the predetermined threshold.

8.  A control parameter generation method for generating a control parameter generated by a control parameter generation device and used by a production device while a sensor with a processing device confirms a state of the production device,

the production device including, a servomotor, a control circuit that controls the servomotor, a memory that stores the control parameter used when the control circuit controls the servomotor, and an object to be driven driven by the servomotor, the control parameter generation method comprising:

measuring, by the sensor with a processing device, a position of the object to be driven after a time at which the object to be driven has reached an allowable position, where the object to be driven is evaluated to have reached a predetermined target position, based on a command for setting the position of the object to be driven to the predetermined target position, and outputting evaluation index data indicating vibration of the object to be driven after a time at which the object to be driven has reached the allowable position;

acquiring the evaluation index data output from the sensor with a processing device and indicating vibration of the object to be driven after a time at which the object to be driven has reached the allowable position;

updating, based on the evaluation index data, the control parameter using a machine learning model that learns a relationship between the evaluation index data and the control parameter in a case where vibration indicated by the evaluation index data is equal to or less than a predetermined threshold;

outputting the updated control parameter to the production device in order to store the updated control parameter in the memory; and

interrupting update of the control parameter when the vibration indicated by the evaluation index data exceeds the predetermined threshold.

9. The control parameter generation method according to Claim 8, further comprising outputting, to a display device, a message indicating that the update of the control parameter is interrupted when the vibration indicated by the evaluation index data exceeds the predetermined threshold.

10. The control parameter generation method according to Claim 8, further comprising resuming the interrupted update of the control parameter based on the evaluation index data acquired after a time when the vibration indicated by the evaluation index data becomes equal to or less than the predetermined threshold in a case where the vibration indicated by the evaluation index data becomes equal to or less than the predetermined threshold after the update of the control parameter is interrupted.

11. The control parameter generation method according to Claim 8, further comprising generating, in the sensor with a processing device, the evaluation index data based on the position of the object to be driven measured by the sensor with a processing device.

12. The control parameter generation method according to Claim 8, wherein the sensor with a processing device includes an image processing device.

13. The control parameter generation method according to Claim 8, wherein the production device includes any one of a mounting device, a processing device, and a machining device.

14. A program for causing a computer of an information processing device connected to the production device to execute the control parameter generation method according to any one of Claims 8 to 13.

15. A recording medium recording a program for causing a computer of an information processing device connected to the production device to execute the control parameter generation method according to any one of Claims 8 to 13.

16. A control parameter generation device that generates a control parameter used by a production device while a sensor with a processing device confirms a state of the production device, the production device including, a servomotor, a first control circuit that controls the servomotor, a memory that stores a control parameter used when the first control circuit controls the servomotor, and an object to be driven driven by the servomotor,

the sensor with a processing device measuring a position of the object to be driven after a time at which the object to be driven has reached an allowable position, where the object to be driven is evaluated to have reached a predetermined target position, based on a command for setting the position of the object to be driven to the predetermined target position, and outputting evaluation index data indicating vibration of the object to be driven after a time at which the object to be driven has reached the allowable position, and

the control parameter generation device comprising:

an input part that acquires evaluation index data indicating vibration of the object to be driven after a time at which the object to be driven has reached the allowable position output from the sensor with a processing device;

a second control circuit that updates, based on the evaluation index data, the control parameter using a machine learning model that learns a relationship between the evaluation index data and the control parameter in a case where the vibration indicated by the evaluation index data is equal to or less than a predetermined threshold; and

an output part that outputs the updated control parameter to the production device in order to store the updated control parameter in the memory,

wherein the second control circuit further interrupts the update of the control parameter when the vibration indicated by the evaluation index data exceeds the predetermined threshold.

# FIG. 1

1

| 10 | | 20 |
|---|---|---|
| GENERATION DEVICE | → | PRODUCTION DEVICE |
| | 30 | |
| | ← SENSOR ← | |

# FIG. 2

1

10 — GENERATION DEVICE

14 — MACHINE LEARNING MODEL

13 — CONTROL CIRCUIT

17 — DISPLAY

16 — IMAGE GENERATION PART

12 — OUTPUT PART

15 — OPERATION RECEIVER

11 — INPUT PART

20 — PRODUCTION DEVICE

21 — MEMORY

22 — CONTROL CIRCUIT

23 — SERVOMOTOR

24 — OBJECT TO BE DRIVEN

30 — SENSOR

# FIG. 3

| PARAMETER NUMBER | VARIABLE NAME | ADJUSTMENT RESOLUTION | ADJUSTMENT RANGE | INITIAL VALUE | ADJUSTMENT TARGET |
|---|---|---|---|---|---|
| 1 | a1 | [0.1 Hz] | 8.0 to 15.0 | 10.0 | VIBRATION FREQUENCY |
| 2 | a2 | [0.1 Hz] | 8.0 to 35.0 | 25.0 | VIBRATION FREQUENCY |
| ... | ... | ... | ... | ... | ... |
| 11 | b1 | [0.001] | 0.0 to 35.0 | 0.1 | SPEED UP |
| 12 | b2 | [0.001] | 0.0 to 35.0 | 10.0 | SPEED UP |
| ... | ... | ... | ... | ... | ... |
| 21 | c1 | [0.1] | 0.0 to 1.0 | 0.5 | DEPTH OF SINGULAR POINT |
| 22 | c2 | [0.1] | 0.0 to 1.0 | 0.3 | DEPTH OF SINGULAR POINT |
| ... | ... | ... | ... | ... | ... |
| 31 | d1 | [0.01 μm] | 0.05 to 0.15 | 0.08 | VIBRATION AMPLITUDE |
| 32 | d2 | [0.01 μm] | 0.05 to 0.15 | 0.08 | VIBRATION AMPLITUDE |
| ... | ... | ... | ... | ... | ... |

# FIG. 4

# FIG. 5

| ELAPSED TIME AFTER ALLOWABLE POSITION ARRIVAL TIME [ms] | DEVIATION FROM TARGET POSITION [mm] |
|---|---|
| 0.01 | 0.982 |
| 0.02 | 0.975 |
| … | … |
| 100.00 | 0.250 |
| 100.01 | 0.333 |
| … | … |

# FIG. 6

EP 4 550 076 A1

# FIG. 7

**SELECTION OF EVALUATION INDEX**

SELECT EVALUATION INDEX

☑ SETTLING TIME

☑ VIBRATION

- ● AREA $\displaystyle\int_{sett\_t}^{cal\_e} |E(t)|\, dt$

- ○ VARIANCE $\displaystyle\frac{\int_{sett\_t}^{cal\_e} E(t)^2 dt}{def} - \left(\frac{\int_{sett\_t}^{cal\_e}|E(t)|dt}{def}\right)^2$

- ○ RMS (EFFECTIVE VALUE) $\displaystyle\sqrt{\frac{1}{def}\int_{sett\_t}^{cal\_e} E(t)^2 dt}$

POSITION DEVIATION f

f=E(t)

REQUIRED ACCURACY

SETTLING TIME

TARGET POSITION

sett_t

cal_e time t

def=cal_e - sett_t

EP 4 550 076 A1

# FIG. 8

DISPLAY CURRENT SITUATION

**ADJUSTMENT SITUATION**

SUSPEND

RESUME

STATUS | ADJUSTING
NUMBER OF ADJUSTMENT PARAMETERS | 40
NUMBER OF TRIALS | 1000
ADJUSTED ELAPSED TIME | 2H30m

EVALUATION INDEX VALUE

#Trials

DISPLAY SELECTED EVALUATION INDEX DATA → EVALUATION INDEX: SETTLING TIME AND VIBRATION (AREA)

DISPLAY CURRENT EVALUATION RESULT →

| Params | num trials | Min | Mean | Max |
|--------|-----------|------|------|------|
| 40 | 1000 | 51.5 | 70.9 | 86.5 |

EP 4 550 076 A1

# FIG. 9

GENERATION DEVICE 10 | SENSOR 30 | PRODUCTION DEVICE 20 (MEMORY 21, CONTROL CIRCUIT 22, SERVOMOTOR 23)

S10 — START PROGRAM
S15 — OUTPUT INITIAL VALUE OF CONTROL PARAMETER
INITIAL VALUE OF CONTROL PARAMETER
S20 — STORE CONTROL PARAMETER
S25 — CONTROL SERVOMOTOR → COMMAND
S30 — DRIVE OBJECT TO BE DRIVEN
S35 — MEASURE POSITION OF OBJECT TO BE DRIVEN
MEASUREMENT DATA
S40 — ACQUIRE MEASUREMENT DATA
S45 — GENERATE EVALUATION INDEX DATA
S55 — LEARN RELATIONSHIP BETWEEN EVALUATION INDEX DATA AND CONTROL PARAMETER
S60 — UPDATE CONTROL PARAMETER
S65 — OUTPUT CONTROL PARAMETER
CONTROL PARAMETER
S20 — STORE CONTROL PARAMETER
S25 — CONTROL SERVOMOTOR → COMMAND
S30 — DRIVE OBJECT TO BE DRIVEN
S35 — MEASURE POSITION OF OBJECT TO BE DRIVEN
MEASUREMENT DATA

REPEAT UNTIL PREDETERMINED CONDITION IS SATISFIED

EP 4 550 076 A1

# FIG. 10

```
  ┌─────────────────────────┐
  │  START FIRST CONTROL    │
  │  PARAMETER ADJUSTMENT   │
  │      PROCESSING         │
  └─────────────────────────┘
              │
              ▼
  ┌─────────────────────────┐
  │     START PROGRAM       │──── S10
  └─────────────────────────┘
              │
              ▼
  ┌─────────────────────────┐
  │  OUTPUT INITIAL VALUE OF│──── S15
  │   CONTROL PARAMETER     │
  └─────────────────────────┘
              │
              ▼
  ┌─────────────────────────┐
  │  STORE CONTROL PARAMETER│──── S20
  └─────────────────────────┘
              │
              ▼
  ┌─────────────────────────┐
  │   CONTROL SERVOMOTOR    │──── S25
  └─────────────────────────┘
              │
              ▼
  ┌─────────────────────────┐
  │ DRIVE OBJECT TO BE DRIVEN│──── S30
  └─────────────────────────┘
              │
              ▼
  ┌─────────────────────────┐
  │  MEASURE POSITION OF    │──── S35
  │   OBJECT TO BE DRIVEN   │
  └─────────────────────────┘
              │
              ▼
  ┌─────────────────────────┐
  │ ACQUIRE MEASUREMENT DATA│──── S40
  └─────────────────────────┘
              │
              ▼
  ┌─────────────────────────┐
  │ GENERATE EVALUATION INDEX│──── S45
  │         DATA            │
  └─────────────────────────┘
              │        S50
              ▼
         ◇─────────────◇    No
        < IS PREDETERMINED >─────────┐
        < CONDITION SATISFIED? >     │
         ◇─────────────◇             ▼
              │ Yes        ┌────────────────────────┐
              │       S55──│ LEARN RELATIONSHIP     │
              │            │ BETWEEN EVALUATION     │
              │            │ INDEX DATA AND         │
              │            │ CONTROL PARAMETER      │
              │            └────────────────────────┘
              │                      │
              │                      ▼
              │            ┌────────────────────────┐
              │       S60──│ UPDATE CONTROL PARAMETER│
              │            └────────────────────────┘
              │                      │
              │                      ▼
              │            ┌────────────────────────┐
              │       S65──│ OUTPUT CONTROL PARAMETER│
              │            └────────────────────────┘
              ▼
         ┌─────────┐
         │   END   │
         └─────────┘
```

31

# FIG. 11

1A

```
    10A                                              20

┌─────────────┐                          ┌─────────────┐
│             │─────────────────────────→│             │
│ GENERATION  │                          │ PRODUCTION  │
│  DEVICE     │              30A         │   DEVICE    │
│             │        ┌──────────────┐  │             │
│             │←───────│ SENSOR WITH  │←─│             │
│             │        │ PROCESSING   │  │             │
│             │        │   DEVICE     │  │             │
└─────────────┘        └──────────────┘  └─────────────┘
```

# FIG. 12

1A

# FIG. 13

EP 4 550 076 A1

# FIG. 14

```
START SECOND CONTROL
PARAMETER ADJUSTMENT
PROCESSING
```

START PROGRAM ⟶ S110

OUTPUT INITIAL VALUE OF
CONTROL PARAMETER ⟶ S115

STORE CONTROL PARAMETER ⟶ S120

CONTROL SERVOMOTOR ⟶ S125

DRIVE OBJECT TO BE DRIVEN ⟶ S130

MEASURE POSITION OF
OBJECT TO BE DRIVEN ⟶ S135

GENERATE EVALUATION INDEX
DATA ⟶ S140

ACQUIRE EVALUATION INDEX DATA ⟶ S145

S150

IS PREDETERMINED
CONDITION SATISFIED? — No

Yes

S155 — LEARN RELATIONSHIP BETWEEN
EVALUATION INDEX DATA AND
CONTROL PARAMETER

S160 — UPDATE CONTROL PARAMETER

S165 — OUTPUT CONTROL PARAMETER

END

# FIG. 15

1B

10B

GENERATION
DEVICE

40

DISPLAY
DEVICE

20

PRODUCTION
DEVICE

30

SENSOR

# FIG. 16

1B

10B

GENERATION
DEVICE

14

MACHINE
LEARNING
MODEL

17

DISPLAY

13B

CONTROL
CIRCUIT

16

IMAGE
GENERATION
PART

12B

OUTPUT PART

15

OPERATION
RECEIVER

11

INPUT PART

40

DISPLAY
DEVICE

20

PRODUCTION
DEVICE

21

MEMORY

22

CONTROL
CIRCUIT

23

SERVOMOTOR

24

OBJECT TO
BE DRIVEN

30

SENSOR

# FIG. 17

| NUMBER OF TIMES OF UPDATE | TIME STAMP | BEST EVALUATION VALUE | CONTROL PARAMETER VALUE AT BEST EVALUATION VALUE |
|---|---|---|---|
| 1 | 2022/03/07 08:26:30 | 21.2 | a1=5.0 b2=0.10 C3=50.0... |
| 2 | 2022/03/07 08:27:10 | 15.3 | a1=5.2 b2=0.13 C3=47.0... |
| ... | ... | ... | ... |
| 501 | 2022/03/07 14:00:17 | 7.8 | a1=4.8 b2=0.07 C3=50.2... |
| 502 | 2022/03/07 14:01:01 | 7.8 | a1=4.8 b2=0.07 C3=50.2... |
| ... | ... | ... | ... |

FIG. 18

POOR

BEST
EVALUATION
VALUE

GOOD

NUMBER OF TIMES OF UPDATE (OR ADJUSTMENT TIME)

# FIG. 19

POOR ⇑

BEST
EVALUATION
VALUE

⇓ GOOD

DEVICE VIBRATION
DETECTION

WAITING FOR ADJUSTMENT
RESTART ...

NUMBER OF TIMES OF UPDATE (OR ADJUSTMENT TIME)

EP 4 550 076 A1

# FIG. 20

START THIRD CONTROL PARAMETER ADJUSTMENT PROCESSING

START PROGRAM — S210

OUTPUT INITIAL VALUE OF CONTROL PARAMETER — S215

STORE CONTROL PARAMETER — S220

CONTROL SERVOMOTOR — S225

DRIVE OBJECT TO BE DRIVEN — S230

MEASURE POSITION OF OBJECT TO BE DRIVEN — S235

ACQUIRE MEASUREMENT DATA — S240

GENERATE EVALUATION INDEX DATA IN ASSOCIATION WITH GENERATION TIME — S270

UPDATE ADJUSTMENT HISTORY — S271

OUTPUT ADJUSTMENT HISTORY — S272

DISPLAY BEST EVALUATION VALUE TRANSITION IMAGE — S273

DETERMINE WHETHER VIBRATION INDICATED BY EVALUATION INDEX DATA EXCEEDS THRESHOLD — S274

IS THRESHOLD EXCEEDED? — S275

OUTPUT MESSAGE — S276

DISPLAY MESSAGE IMAGE IN SUPERIMPOSED MANNER — S277

Yes

No

IS PREDETERMINED CONDITION SATISFIED? — S250

No

LEARN RELATIONSHIP BETWEEN EVALUATION INDEX DATA AND CONTROL PARAMETER — S255

UPDATE CONTROL PARAMETER — S260

OUTPUT CONTROL PARAMETER — S265

Yes

END

# FIG. 21

<u>1C</u>

| | | |
|---|---|---|
| 10C | 40 | 20 |
| GENERATION DEVICE | DISPLAY DEVICE | PRODUCTION DEVICE |
| | 30C | |
| | SENSOR WITH PROCESSING DEVICE | |

# FIG. 22

<u>1C</u>

10C
GENERATION DEVICE

14
MACHINE LEARNING MODEL

17 DISPLAY

13C CONTROL CIRCUIT

16 IMAGE GENERATION PART

12B OUTPUT PART

15 OPERATION RECEIVER

11C INPUT PART

40 DISPLAY DEVICE

20 PRODUCTION DEVICE

21 MEMORY

22 CONTROL CIRCUIT

23 SERVOMOTOR

24 OBJECT TO BE DRIVEN

30C SENSOR WITH PROCESSING DEVICE

# FIG. 23

```
START FOURTH CONTROL
PARAMETER ADJUSTMENT
PROCESSING
        │
        ▼
START PROGRAM ──────────────── S310
        │
        ▼
OUTPUT INITIAL VALUE OF ─────── S315
CONTROL PARAMETER
        │
        ▼
STORE CONTROL PARAMETER ─────── S320
        │
        ▼
CONTROL SERVOMOTOR ──────────── S325
        │
        ▼
DRIVE OBJECT TO BE DRIVEN ───── S330
        │
        ▼
MEASURE POSITION OF OBJECT TO BE DRIVEN ── S335
        │
        ▼
ACQUIRE MEASUREMENT DATA ────── S340
        │
        ▼
ACQUIRE EVALUATION INDEX DATA IN ── S370
ASSOCIATION WITH GENERATION TIME
        │
        ▼
UPDATE ADJUSTMENT HISTORY ───── S371
        │
        ▼
OUTPUT ADJUSTMENT HISTORY ───── S372              OUTPUT MESSAGE ──── S376
        │                                                │
        ▼                                                ▼
DISPLAY BEST EVALUATION VALUE ── S373    DISPLAY MESSAGE IMAGE IN ── S377
TRANSITION IMAGE                         SUPERIMPOSED MANNER
        │
        ▼
DETERMINE WHETHER VIBRATION INDICATED ── S374
BY EVALUATION INDEX DATA EXCEEDS
THRESHOLD
        │
        ▼
IS THRESHOLD EXCEEDED? ──────── S375
        │              Yes ──►  LEARN RELATIONSHIP BETWEEN ── S355
        │ No                    EVALUATION INDEX DATA AND
        ▼                       CONTROL PARAMETER
IS PREDETERMINED ──── S350              │
CONDITION SATISFIED?                    ▼
        │         No ──►          UPDATE CONTROL PARAMETER ── S360
        │ Yes                           │
        ▼                               ▼
      END                       OUTPUT CONTROL PARAMETER ── S365
```

# FIG. 24

EP 4 550 076 A1

# FIG. 25

1D

**10**

GENERATION
DEVICE

**14**

MACHINE
LEARNING
MODEL

**13**

CONTROL
CIRCUIT

**17**

DISPLAY

**16**

IMAGE
GENERATION
PART

**12**

OUTPUT PART

**15**

OPERATION
RECEIVER

**11**

INPUT PART

**20D**

PRODUCTION
DEVICE

**21**

MEMORY

**22**

CONTROL
CIRCUIT

**23**

SERVOMOTOR

**24**

OBJECT TO
BE DRIVEN

# FIG. 26

Legend:
- – – – WITH TRAVELING OF LARGE TRUCK
- —— WITHOUT TRAVELING OF LARGE TRUCK

AMPLITUDE

THRESHOLD

ELAPSED TIME

THRESHOLD

EP 4 550 076 A1

## INTERNATIONAL SEARCH REPORT

| International application No. |
| --- |
| **PCT/JP2023/024163** |

| **A.** | **CLASSIFICATION OF SUBJECT MATTER** |
| --- | --- |

*G05D 3/12*(2006.01)i; *G05B 13/02*(2006.01)i; *G05B 19/4155*(2006.01)i; *G07C 3/00*(2006.01)i; *H02P 29/00*(2016.01)i
FI:  G05D3/12 S; G05B13/02 L; G05B19/4155 V; G07C3/00; H02P29/00

According to International Patent Classification (IPC) or to both national classification and IPC

| **B.** | **FIELDS SEARCHED** |
| --- | --- |

Minimum documentation searched (classification system followed by classification symbols)

  G05D3/12; G05B13/02; G05B19/4155; G07C3/00; H02P29/00

Documentation searched other than minimum documentation to the extent that such documents are included in the fields searched

  Published examined utility model applications of Japan 1922-1996
  Published unexamined utility model applications of Japan 1971-2023
  Registered utility model specifications of Japan 1996-2023
  Published registered utility model applications of Japan 1994-2023

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | WO 2021/053784 A1 (MITSUBISHI ELECTRIC CORPORATION) 25 March 2021 (2021-03-25)<br>  paragraphs [0014]-[0020], [0084]-[0087], [0089]-[0090], fig. 1, 6-7 | 1-16 |
| Y | JP 2006-170056 A (TOYOTA MOTOR CORP) 29 June 2006 (2006-06-29)<br>  paragraphs [0039]-[0040] | 1-16 |
| Y | JP 2020-4080 A (FANUC LTD) 09 January 2020 (2020-01-09)<br>  paragraphs [0080]-[0089], fig. 7 | 2, 9 |
| Y | JP 9-319402 A (TOSHIBA CORP) 12 December 1997 (1997-12-12)<br>  paragraphs [0026]-[0027], fig. 1 | 3, 10 |
| Y | JP 2020-148624 A (OKI ELECTRIC IND CO LTD) 17 September 2020 (2020-09-17)<br>  paragraphs [0017]-[0020], [0023] | 8-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 August 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2023/024163** |

| Patent document cited in search report | | | Publication date (day/month/year) | Patent family member(s) | Publication date (day/month/year) |
|---|---|---|---|---|---|
| WO | 2021/053784 | A1 | 25 March 2021 | US 2022/0308531 A1 paragraphs [0029]-[0036], [0076]-[0079], [0081]-[0082], fig. 1, 6-7<br>KR 10-2022-0044549 A<br>CN 114514481 A<br>TW 202113634 A | |
| JP | 2006-170056 | A | 29 June 2006 | (Family: none) | |
| JP | 2020-4080 | A | 09 January 2020 | US 2020/0005499 A1 paragraphs [0091]-[0104], fig. 7<br>DE 102019209104 A1<br>CN 110658785 A | |
| JP | 9-319402 | A | 12 December 1997 | (Family: none) | |
| JP | 2020-148624 | A | 17 September 2020 | (Family: none) | |

Form PCT/ISA/210 (patent family annex) (January 2015)

**EP 4 550 076 A1**

**Patent documents cited in the description**

- WO 2018151215 A